# EUROPEAN PATENT SPECIFICATION

(11) **EP 4 641 353 B1**
(45) Date of publication and mention of the grant of the patent: **21.10.2026**
(21) Application number: 23925030.1
(22) Date of filing: 28.11.2023
(51) Int. Cl.: G06F 3/01, G06V 40/18, G06V 40/19, G06V 10/10, G06V 40/16, G06V 40/12

(54) **MESSAGE PROCESSING METHOD, ELECTRONIC DEVICE, AND READABLE STORAGE MEDIUM**
NACHRICHTENVERARBEITUNGSVERFAHREN, ELEKTRONISCHE VORRICHTUNG UND LESBARES SPEICHERMEDIUM
PROCÉDÉ DE TRAITEMENT DE MESSAGE, DISPOSITIF ÉLECTRONIQUE ET SUPPORT DE STOCKAGE LISIBLE

(30) Priority: 27.02.2023 CN 202310212372
(43) Date of publication of application: 29.10.2025
(73) Proprietor: Honor Device Co., Ltd., Shenzhen, Guangdong 518040 (CN)
(72) Inventor: LV, Jianming, Shenzhen, Guangdong 518040 (CN); YUAN, Jiangfeng, Shenzhen, Guangdong 518040 (CN)
(74) Representative: Goddar, Heinz J.
(86) International application number: PCT/CN2023/134729
(87) International publication number: WO 2024/179082

(56) References cited:
- WO-A1-2019/200578
- WO-A1-2019/200578
- WO-A1-2023/015958
- CN-A- 107 608 514
- CN-A- 107 608 514
- CN-A- 107 924 449
- CN-A- 108 038 453
- CN-A- 110 825 226
- CN-A- 114 518 926
- US-A1- 2012 268 372
- US-A1- 2020 280 628
- US-A1- 2022 027 621

## Description

### TECHNICAL FIELD

This application relates to the field of intelligent interaction technologies, and in particular, to a message processing method, an electronic device, and a readable storage medium.

### BACKGROUND

When an electronic device receives a notification message, the electronic device performs display in a specified area for displaying the notification message, for example, a mobile phone lock screen interface or a pull-down notification bar of a home screen.

When content of the notification message is excessive, the electronic device displays content of a beginning part of the notification message in the specified area. Then, when detecting that a user performs a tap operation on the notification message, the electronic device displays the complete content of the message. Alternatively, when a user watches a short video or a news page, a slide operation needs to be performed on the electronic device to implement page turning. In the foregoing process of interaction between the user and the electronic device, a touch control manner needs to be used. In some cases that the user cannot touch the electronic device, an interactive operation of touch control brings inconvenience to people. CN107608514A (VIVO COMM TECHNOLOGY CO LTD) 19 January 2018 (2018-01-19), discloses a method for processing information by mobile terminal, which involves determining watch area of a user, and displaying detailed information of user when watch area matched with a preset area corresponding to notification information. US2022027621A1 (SENGELAUB TOM [US] ET AL) 27 January 2022 (2022-01-27), discloses a method to detect, at a device having one or more processors, one or more image sensors, and an illumination source, a first attribute of an eye based on pixel differences associated with different wavelengths of light in a first image of the eye. The method next determines a first location associated with the first attribute in a three dimensional (3D) coordinate system based on depth information from a depth sensor. A second attribute of the eye is detected based on a glint resulting from light of the illumination source reflecting off a cornea of the eye. A second location associated with the second attribute in the 3D coordinate system is determined based on the depth information from the depth sensor, and a gaze direction in the 3D coordinate system is determined based on the first location and the second location. WO2019200578A1 (SHENZHEN FUSHI TECH CO LTD [CN]) 24 October 2019 (2019-10-24), discloses an electronic apparatus and an identity recognition method thereof. The identity recognition method comprises: S1, when an electronic apparatus is required to perform identity recognition, acquiring a 2D image of an object in front of the electronic apparatus; S2, matching the acquired 2D image against a pre-determined 2D image template; S3, if the acquired 2D image matches the pre-determined 2D image template, acquiring surface profile information of the object in front of the electronic apparatus; S4, determining, according to the acquired surface profile information of the object, whether the object is a face with three-dimensional geometry; and S5, if so, determining the object to have a valid identity. The electronic apparatus runs the identity recognition method.

### SUMMARY

In view of this, this application provides a message processing method, an electronic device, and a readable storage medium. Coordinates of a gaze point and gaze duration of a user may be determined through recognition on eye movement of the user, a notification message that the user is interested in is determined based on the coordinates of the gaze point and the gaze duration, and interaction corresponding to eye movement recognition data is performed on the notification message, so that the user can interact with the electronic device without touching the electronic device, thereby improving convenience of human-computer interaction.

According to a first aspect, a message processing method according to this application is applied to an electronic device. The electronic device displays a first interface, and the first interface includes a notification message. Then, the electronic device collects first image data by using a target image sensor, where the first image data includes an eye image of a user. The electronic device may determine first eye movement data of the user based on the first image data of the user, where the first eye movement data includes coordinates of a first gaze point and first gaze duration. When the user gazes at the notification message in the first interface, the coordinates of the first gaze point that are determined by the electronic device are located in a display area of the notification message, and the first gaze duration is greater than a first preset duration threshold. In this case, it is indicated that the user is interested in viewing the notification message. Therefore, the electronic device may display a second interface, and the second interface is a display interface of an application corresponding to the notification message.

In the foregoing message processing method, by capturing and recognizing the eye image of the user, the electronic device may determine the coordinates of the gaze point and gaze duration of the user on a display. Then, the electronic device may determine, based on the gaze point and the gaze duration of the user, whether the user wants to perform an operation on the notification message on the display interface, to implement an interactive operation that is on the notification message and that is based on eye movement of the user. In this way, the user can easily perform a contactless human-computer interaction process on the electronic device through eye movement.

In a possible implementation of the first aspect, a process of displaying the first interface by the electronic device is as follows: First, a third interface is displayed, where the third interface includes a long notification message in a folded state, and a quantity of characters of the long notification message is greater than a preset character threshold; then, the target image sensor collects second image data, where the second image data includes an eye image of the user; after that, second eye movement data of the user is determined based on the second image data of the user, where the second eye movement data includes coordinates of a second gaze point and second gaze duration; and finally, in response to that the coordinates of the second gaze point are located in a display area of the long notification message, and the second gaze duration is greater than a second preset duration threshold, the first interface is displayed, where the first interface includes the long notification message in an unfolded state.

In the foregoing message processing method, the long notification message is displayed in a folded manner on the third interface, to ensure effective information displaying on a limited interface, and avoid that lengthy content in the long notification message is displayed on the third interface, thereby improving display effect. By collecting the second image data, the electronic device may determine a willingness of the user to view the long notification message. If the user gazes at the folded long notification message for a long time, it can be determined that the user wants to view the long notification message. Therefore, in a case that the coordinates of the second gaze point are located in the display area of the long notification message and the second gaze duration is greater than the second preset duration threshold, the electronic device may display the first interface, where the first interface includes the long notification message in the unfolded state.

In a possible implementation of the first aspect, after displaying the first interface, the electronic device may collect third image data by using the target image sensor, where the third image data includes an eye image of the user. Then, the electronic device determines third eye movement data of the user based on the third image data of the user, where the third eye movement data includes coordinates of a third gaze point and third gaze duration. Finally, in response to that the coordinates of the third gaze point are located outside the display area of the long notification message on the first interface, the electronic device displays a fourth interface, where the fourth interface includes the long notification message in the folded state, or the fourth interface does not include the long notification message.

In the foregoing message processing method, after displaying the first interface, the electronic device may determine, by using the coordinates of the third gaze point and the third gaze duration that are determined by using the third image data, an interest of the user in reading the notification message. If the coordinates of the third gaze point are located outside the display area of the long notification message on the first interface, it may be indicated that the user is no longer interested in continuing to read the notification message, and the electronic device may continue to display the long notification message in the folded state on the fourth interface. Alternatively, the electronic device may remove the long notification message from the displayed fourth interface.

In a possible implementation of the first aspect, in response to that the coordinates of the first gaze point are located outside a display area of the notification message, the electronic device may alternatively display a fifth interface after first preset duration, where the fifth interface does not include the notification message.

When detecting that the coordinates of the first gaze point are located outside the display area of the notification message, and the electronic device may determine that the user no longer intends to read the notification message in the first display interface. In this case, the electronic device may display the fifth interface that does not include the notification message, to implement that the read message is not repeatedly displayed.

The electronic device includes a time of flight TOF image sensor and an RGB image sensor. Correspondingly, the electronic device first obtains current ambient light luminance, and controls, in response to that the current ambient light luminance is greater than a first preset luminance threshold, the RGB image sensor to collect first RGB image data; or controls, in response to that the current ambient light luminance is less than or equal to a first preset luminance threshold, the TOF image sensor to collect first TOF image data. Image data collected by the TOF image sensor in dark light is more accurate, and image data collected by the RGB image sensor in bright light is more accurate. Therefore, the electronic device may select an appropriate target image sensor by using the current ambient light luminance, so that the first image data can be accurately collected by using the target image sensor.

In a possible implementation of the first aspect, after controlling, in response to that the current ambient light luminance is greater than the first preset luminance threshold, the RGB image sensor to collect the first RGB image data, the electronic device may further determine whether eyes of the user are covered by a reflective object, and switch operating states of the RGB image data and the TOF image sensor based on a determining result. If it is determined, based on the first RGB image data, that the eyes of the user are not covered by the reflective object, the RGB image sensor is controlled to be turned off, and the TOF image sensor is controlled to be turned on and then collect the first image data, thereby ensuring accuracy of the image data collected by the image sensor.

In a possible implementation of the first aspect, the electronic device includes a time of flight TOF image sensor and an RGB image sensor. The electronic device may first control the RGB image sensor to collect first RGB image data and the TOF image sensor to collect first TOF image data. If it is determined, based on the first RGB image data and/or the first TOF image data, that eyes of the user are covered by a reflective object, current ambient light luminance is obtained. Then, in response to that the current ambient light luminance is greater than a first preset luminance threshold, the electronic device may control the TOF image sensor to be turned off, to accurately collect the first image data by using the target image sensor.

In a possible implementation of the first aspect, the electronic device may further determine an eye movement calibration result, to ensure accurate recognition on eye movement based on the eye movement calibration result. Specifically, the electronic device displays a sixth interface, where the sixth interface includes at least one calibration location. The electronic device collects fourth image data by using the target image sensor, and determines coordinates of a fourth gaze point of the user based on the fourth image data. Then, the electronic device may determine the eye movement calibration result based on an error between coordinates of the calibration location and the coordinates of the fourth gaze point.

In a possible implementation of the first aspect, the electronic device includes the time of flight TOF image sensor and the RGB image sensor. In a process of obtaining the eye movement calibration result, the electronic device may control the TOF image sensor to collect second TOF image data, and control the RGB image sensor to collect second RGB image data. In a manner of jointly collecting image data by two image sensors, accuracy of the eye movement calibration result can be ensured, and an error is avoided.

In a possible implementation of the first aspect, in a process in which the electronic device obtains the eye movement calibration result, to ensure that the TOF image sensor and the RGB image sensor can synchronously perform collection and the accuracy of the eye movement calibration result is improved, the TOF image sensor and the RGB image sensor may be connected through a connection cable. The connection cable is configured to transmit a synchronization signal, so that the TOF image sensor and the RGB image sensor synchronously collect the image data based on the synchronization signal.

In a possible implementation of the first aspect, the electronic device includes a hardware abstraction layer HAL and a hardware layer. The HAL includes an intelligent awareness control module and an intelligent awareness TA. The hardware layer includes a secure memory, and the secure memory is used to store image data collected by the target image sensor. The intelligent awareness TA runs in a trusted execution environment. That the electronic device determines the first eye movement data of the user based on the first image data of the user includes: The intelligent awareness control module obtains a file descriptor, where the file descriptor is used to describe a storage location of the first image data in the electronic device; the intelligent awareness TA obtains the first image data from the secure memory based on the file descriptor; the intelligent awareness TA encrypts the first image data, and sends encrypted first image data to the intelligent awareness control module; and the intelligent awareness control module decrypts the encrypted first image data, and determines the first eye movement data based on the first image data. To ensure security of the image data during transmission, the intelligent awareness TA encrypts the image and then sends encrypted image to the intelligent awareness control module. Alternatively, the intelligent awareness TA determines the first eye movement data based on the first image data, and sends the first eye movement data to the intelligent awareness control module. The eye movement data is determined by the intelligent awareness TA running in the trusted execution environment, so that it may also be avoided that the image data is damaged in a transmission process.

In another possible implementation of the first aspect, the electronic device further includes a kernel layer. The HAL further includes a Camera hardware abstraction layer HAL. The Camera HAL includes a sensor node. The kernel layer further includes a camera driver. The hardware layer further includes at least one image sensor and a corresponding register. The at least one image sensor is disposed in one or more cameras. When the electronic device collects the first image data by using the target image sensor, the following process may be used. First, the sensor node obtains an identifier and a configuration parameter of the to-be-controlled target image sensor. The sensor node sends the identifier and the configuration parameter of the target image sensor to the camera driver. The camera driver configures configuration data of the target image sensor in a register of the target image sensor based on the identifier of the target image sensor. The camera driver sends a data configuration completion message to the sensor node. The sensor node sends a first start command to the camera driver based on the data configuration completion message. The camera driver sends a second start command to the target image sensor. The target image sensor obtains the configuration parameter of the target image sensor from the register according to the second start command, and collects the image data based on the configuration parameter.

In the foregoing method, the sensor node may obtain the identifier and the configuration parameter of the target image sensor based on the request sent by the intelligent awareness control module. Then, the electronic device may perform configuration and start operations on the target image sensor based on the identifier and the configuration parameter of the target image sensor, to ensure that a corresponding target image sensor can collect image data.

In a possible implementation of the first aspect, the electronic device further includes an application layer and a framework layer. The application layer includes a system user interface UI, and the framework layer includes an intelligent awareness service. After displaying the first interface, the electronic device may create a path of the image sensor by using the following method. First, the system UI sends an intelligent awareness registration request to the intelligent awareness service, where the intelligent awareness registration request is used to start an eye movement recognition procedure or an eye movement calibration procedure. Then, the intelligent awareness service sends an intelligent awareness procedure invoking request to the intelligent awareness control module based on the intelligent awareness registration request, where the intelligent awareness procedure invoking request includes the identifier and the configuration parameter of the target image sensor. Finally, the intelligent awareness control module creates a path of the target image sensor based on the identifier and the configuration parameter of the target image sensor.

In a possible implementation of the first aspect, the framework layer further includes a camera service. When creating the path of the target image sensor, the electronic device may first control the camera service to receive a request that is for creating the path of the target image sensor and that is sent by the intelligent awareness control module. The request for creating the path includes the identifier and the configuration parameter of the target image sensor. The camera service sends the identifier and the configuration parameter of the target image sensor to the Camera HAL. The Camera HAL creates the path of the target image sensor based on the identifier of the target image sensor. The Camera HAL returns, to the camera service, a result that the path of the target image sensor is successfully created. The camera service returns a path creation result of the target image sensor to the intelligent awareness control module based on the received result that the path of the target image sensor is successfully created. The intelligent awareness control module first sends the request for creating the path to the camera service, so that the camera service may send, to the Camera HAL, the identifier and the configuration parameter that are of the target image sensor and that are included in the request for creating the path, to implement path creation of the target image sensor.

In a possible implementation of the first aspect, that the intelligent awareness control module obtains a file descriptor includes: The intelligent awareness control module sends a data request to the camera service, where the data request is used to obtain the file descriptor; the camera service invokes the Camera HAL to obtain the file descriptor based on the data request; and the camera service sends the file descriptor to the intelligent awareness control module.

According to a second aspect, this application provides an electronic device. The electronic device includes a display, a camera, a memory, and one or more processors. The display, the camera, and the memory are coupled to the processor. The camera includes a time of flight TOF image sensor and an RGB image sensor. The display is configured to display an image generated by the processor. The camera is configured to capture an image. The memory is configured to store computer program code. The computer program code includes computer instructions. When the processor executes the computer instructions, the electronic device is enabled to perform the method according to any one of the first aspect and possible design manners of the first aspect.

According to a third aspect, this application provides a readable storage medium, including computer instructions. When the computer instructions are run on an electronic device, the electronic device is enabled to perform the method according to any one of the first aspect and possible design manners of the first aspect.

According to a fourth aspect, this application provides a computer program product. When the computer program product runs on an electronic device, the electronic device is enabled to perform the method according to any one of the first aspect and possible design manners of the first aspect.

It may be understood that the method according to the first aspect, the electronic device according to the second aspect, the readable storage medium according to the third aspect, and the computer program product according to the fourth aspect are all used to execute the foregoing corresponding methods. Therefore, for beneficial effect that can be achieved by the method, the electronic device, the readable storage medium, and the computer program product, reference may be made to beneficial effect in the foregoing corresponding methods. Details are not described herein again.

### BRIEF DESCRIPTION OF DRAWINGS

FIG. 1 is a schematic diagram of a one-handed operation according to an embodiment of this application;
FIG. 2 is a schematic diagram of an electronic device according to an embodiment of this application;
FIG. 3 is a schematic diagram of a structure of an electronic device according to an embodiment of this application;
FIG. 4 is a block diagram of a software structure of an electronic device according to an embodiment of this application;
FIG. 5 is a schematic diagram of interaction between software modules according to an embodiment of this application;
FIG. 6A to FIG. 6C are a schematic diagram of display according to an embodiment of this application;
FIG. 7 is another schematic diagram of display according to an embodiment of this application;
FIG. 8 is a schematic diagram of an eye movement interaction setting interface according to an embodiment of this application;
FIG. 9A and FIG. 9B are a signal interaction diagram of eye movement calibration according to an embodiment of this application;
FIG. 10A and FIG. 10B are a schematic diagram of eye movement interaction according to an embodiment of this application;
FIG. 11A and FIG. 11B are another schematic diagram of eye movement interaction according to an embodiment of this application;
FIG. 12 is another schematic diagram of eye movement interaction according to an embodiment of this application;
FIG. 13A and FIG. 13B are a signal interaction diagram of eye movement recognition according to an embodiment of this application;
FIG. 14A to FIG. 14D are another schematic diagram of eye movement interaction according to an embodiment of this application;
FIG. 15 is another schematic diagram of display according to an embodiment of this application;
FIG. 16 is a schematic diagram of a lock screen interface according to an embodiment of this application;
FIG. 17 is a schematic flowchart of a message processing method according to an embodiment of this application;
FIG. 18A and FIG. 18B are a schematic diagram of eye movement interaction according to an embodiment of this application; and
FIG. 19 is a schematic diagram of a structure of an electronic device according to an embodiment of this application.

### DESCRIPTION OF EMBODIMENTS

The following terms "first" and "second" are merely intended for a purpose of description, and shall not be understood as indicating or implying relative importance or implying a quantity of indicated technical features. Therefore, a feature limited by "first" or "second" may explicitly or implicitly include one or more features. In descriptions of embodiments, unless otherwise specified, "a plurality of" means two or more.

To describe the following embodiments clearly and briefly, related concepts or technologies are first briefly described.

A rich execution environment (rich execution environment, REE) may also be referred to as a rich execution environment, a common execution environment, an untrusted execution environment, or the like. The rich execution environment is a system running environment of a mobile end, and operating systems such as iOS^{®}, Android^{®}, Harmony^{®}, Windows^{®}, and Linux^{®} may run in the system running environment. The REE is open and well expanded.

A trusted execution environment (trusted execution environment, TEE) may also be referred to as a security side or a security area, and is an area that needs authorization for access. The TEE means that an independent security area is established inside a processor in a hardware resource isolation manner. The TEE and an REE coexist in a running environment of an electronic device, but the TEE and the REE are completely hardware-isolated. The TEE has running space of the TEE, and strict protection measures are set. Therefore, a security level of the TEE is higher than a security level of the REE, and the REE cannot access a related resource of the TEE. Therefore, the TEE has a security capability of protecting internal code and information of the TEE, and can resist an attack from the REE and a security threat.

An REE+TEE architecture is an architecture that provides a service for an application through a combination of a TEE and an REE. In other words, the TEE and the REE coexist in an electronic device. For example, the TEE may implement a running mechanism separated from the REE through hardware support. The TEE has running space of the TEE, and a security level of the TEE is higher than a security level of the REE, so that the TEE can protect assets (such as data and software) in the TEE from a software attack. Only authorized security software can be executed in the TEE, so that the TEE also protects a resource of the security software and data confidentiality. Compared with the REE, the TEE can better protect data and resource security due to protection mechanisms of the TEE, for example, isolation and authority control.

A trusted application (trusted application, TA) is an application running in a TEE, and can provide a security service for a client application (client application, CA) running in an REE, for example, key generation and key management, security authentication, intelligent awareness, and another secure task.

A CA is usually an application running in an REE, and may invoke a TA by using a client (Client) application programming interface (application programming interface, API), and indicate the TA to perform a corresponding security operation.

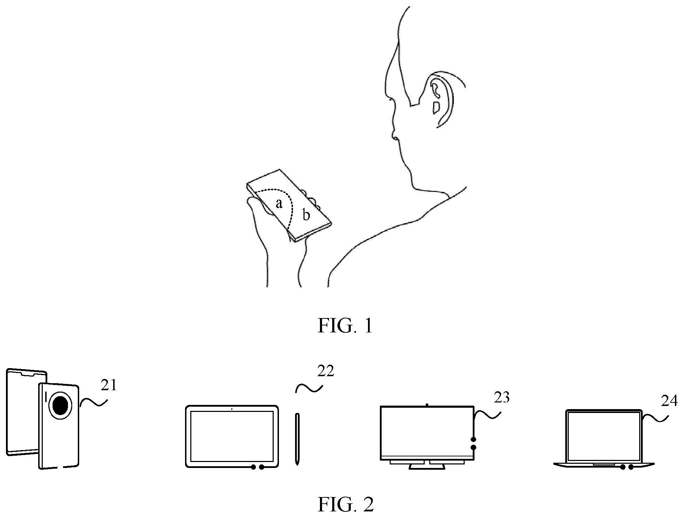

When using an electronic device such as a mobile phone, a tablet computer, or a television, a user usually needs to interact with the electronic device, to implement control on the electronic device. The user may interact with the electronic device by using a physical button, for example, press a physical button disposed on the mobile phone, and press a keyboard connected to the computer. The user may alternatively interact with the electronic device in a touch manner, for example, perform, by using the mobile phone, an operation such as touch, tap, or slide on a touch display of the mobile phone. However, all these interaction manners require the user to touch the electronic device to implement interaction. In a case that the user cannot touch the electronic device, the user cannot interact with the electronic device. In addition, in a case that the user performs a one-handed operation on the electronic device, for example, as shown in FIG. 1, after the user holds a mobile phone of a specific size in a one-handed manner, only an operation of touching a process in an area a in a touch display may be performed by using a thumb, and an operation such as tap or slide cannot be performed on an area b.

Therefore, this application provides a message processing method. By capturing and recognizing an eye image of a user, an electronic device may determine coordinates of a gaze point and gaze duration of the user on a display. Then, the electronic device may determine, based on the gaze point and the gaze duration of the user, whether the user wants to perform an operation on a notification message on a display interface, to implement an interactive operation that is on the notification message and that is based on eye movement of the user. In this way, the user can easily perform a contactless human-computer interaction process on the electronic device through eye movement.

The message processing method according to this embodiment of this application may be applied to an electronic device 100. For example, as shown in FIG. 2, the electronic device 100 may be specifically a terminal device with a display function, for example, a mobile phone 21, a tablet computer 22, a smart screen 23, a notebook computer 24, a vehicle-mounted device, a wearable device (such as a smart watch), an ultra-mobile personal computer (ultra-mobile personal computer, UMPC), a netbook, a personal digital assistant (personal digital assistant, PDA), or an artificial intelligence (artificial intelligence) device. An operating system installed on the electronic device 100 includes but is not limited to iOS^{®}, Android^{®}, Harmony^{®}, Windows^{®}, Linux^{®}, or another operating system. A specific type of and the operating system installed on the electronic device 100 are not limited in this application.

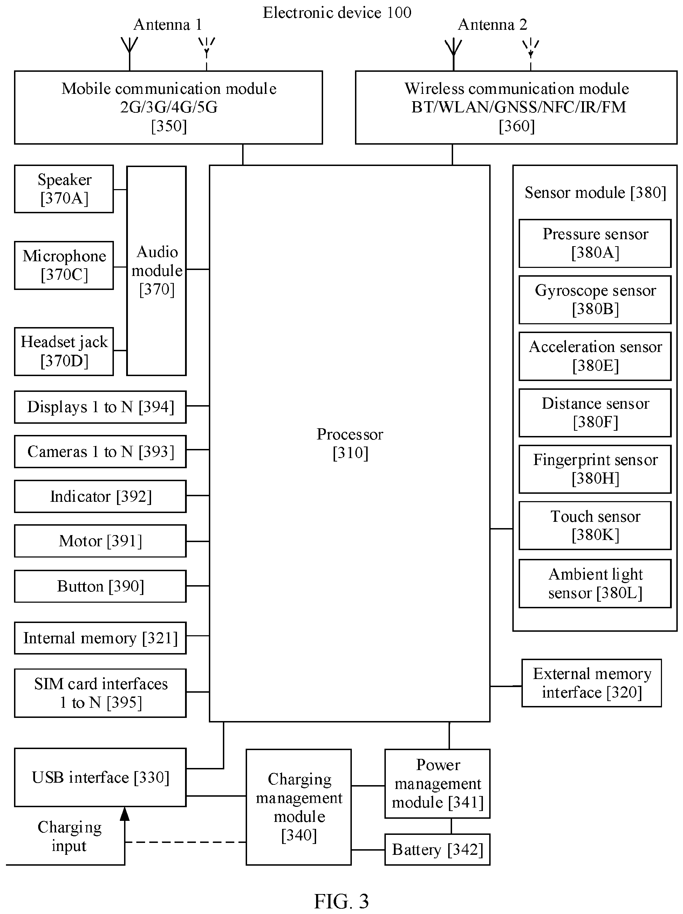

FIG. 3 is a schematic diagram of a structure of the electronic device 100. The electronic device 100 includes a processor 310, an external memory interface 320, an internal memory 321, a universal serial bus (universal serial bus, USB) port 330, a charging management module 340, a power management module 341, a battery 342, an antenna 1, an antenna 2, a mobile communication module 350, a wireless communication module 360, an audio module 370, a speaker 370A, a receiver 370B, a microphone 370C, a headset jack 370D, a sensor module 380, a button 390, a motor 391, an indicator 392, a camera 393, a display 394, and a subscriber identification module (subscriber identification module, SIM) card interface 395.

It may be understood that the structure shown in this embodiment of the present invention does not constitute a specific limitation on the electronic device 100. In some other embodiments of this application, the electronic device 100 may include more or fewer components than those shown in the figure, or combine some components, or split some components, or have different component arrangements. The components shown in the figure may be implemented by hardware, software, or a combination of software and hardware.

The processor 310 may include one or more processing units. For example, the processor 310 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent components, or may be integrated into one or more processors.

The controller may be a neural center and a command center of the electronic device 100. The controller may generate an operation control signal based on instruction operation code and a time sequence signal, to control instruction reading and instruction execution.

A memory may be further disposed in the processor 310, and is configured to store instructions and data. In some embodiments, the memory in the processor 310 is a cache. The memory may store instructions or data that has been recently used or cyclically used by the processor 310. If the processor 310 needs to use the instructions or the data again, the instructions or the data may be directly invoked from the memory. This avoids repeated access and reduces waiting time of the processor 310, thereby improving system efficiency.

In some embodiments, the processor 310 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) port, and/or the like.

The I2C interface is a two-way synchronous serial bus, and includes one serial data line (serial data line, SDA) and one derail clock line (derail clock line, SCL). In some embodiments, the processor 310 may include a plurality of groups of I2C buses. The processor 310 may be separately coupled to a touch sensor 380K, a charger, a flash, the camera 393, and the like through different I2C bus interfaces. For example, the processor 310 may be coupled to the touch sensor 380K through the I2C interface, so that the processor 310 communicates with the touch sensor 380K through the I2C bus interface, to implement a touch function of the electronic device 100.

The MIPI interface may be configured to connect the processor 310 and a peripheral component such as the display 394 or the camera 393. The MIPI interface includes a camera serial interface (camera serial interface, CSI), a display serial interface (display serial interface, DSI), and the like. In some embodiments, the processor 310 communicates with the camera 393 by using the CSI, to implement an image shooting function of the electronic device 100. The processor 310 communicates with the display 394 by using the DSI, to implement a display function of the electronic device 100.

The GPIO interface may be configured by software. The GPIO interface may be configured as a control signal, or may be configured as a data signal. In some embodiments, the GPIO interface may be configured to connect the processor 310 and the camera 393, the display 394, the wireless communication module 360, the audio module 370, the sensor module 380, and the like. The GPIO interface may alternatively be configured as an I2C interface, an I2S interface, a UART interface, an MIPI interface, or the like.

It may be understood that an interface connection relationship between the modules shown in this embodiment of the present invention is merely an example for description, and does not constitute a limitation on the structure of the electronic device 100. In some other embodiments of this application, the electronic device 100 may alternatively use an interface connection manner different from that in the foregoing embodiment, or use a combination of a plurality of interface connection manners.

The charging management module 340 is configured to receive a charging input from the charger. The charger may be a wireless charger, or may be a wired charger. In some embodiments of wired charging, the charging management module 340 may receive a charging input from the wired charger by using the USB port 330. In some embodiments of wireless charging, the charging management module 340 may receive a wireless charging input by using a wireless charging coil of the electronic device 100. When charging the battery 342, the charging management module 340 may further supply power to the electronic device by using the power management module 341.

The power management module 341 is configured to connect to the battery 342, the charging management module 340 and the processor 310. The power management module 341 receives an input from the battery 342 and/or the charging management module 340, and supplies power to the processor 310, the internal memory 321, an external memory, the display 394, the camera 393, the wireless communication module 360, and the like. The power management module 341 may be further configured to monitor parameters such as a battery capacity, a quantity of battery cycles, and a battery health status (electric leakage or impedance). In some other embodiments, the power management module 341 may alternatively be disposed in the processor 310. In some other embodiments, the power management module 341 and the charging management module 340 may alternatively be disposed in a same component.

A wireless communication function of the electronic device 100 may be implemented by using the antenna 1, the antenna 2, the mobile communication module 350, the wireless communication module 360, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may be further multiplexed to improve antenna utilization. For example, the antenna 1 may be multiplexed as a diversity antenna of a wireless local area network. In some other embodiments, the antenna may be used in combination with a tuning switch.

The mobile communication module 350 may provide a wireless communication solution that is applied to the electronic device 100 and that includes 2G/3G/4G/5G or the like. The mobile communication module 350 may include at least one filter, a switch, a power amplifier, a low noise amplifier (low noise amplifier, LNA), and the like. The mobile communication module 350 may receive an electromagnetic wave by using the antenna 1, perform processing such as filtering or amplification on the received electromagnetic wave, and then transmit a processed electromagnetic wave to the modem processor for demodulation. The mobile communication module 350 may further amplify a signal modulated by the modem processor, and convert an amplified signal into an electromagnetic wave for radiation by using the antenna 1.

The wireless communication module 360 may provide a wireless communication solution that is applied to the electronic device 100, and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, and the like.

In some embodiments, the antenna 1 and the mobile communication module 350 in the electronic device 100 are coupled, and the antenna 2 and the wireless communication module 360 are coupled, so that the electronic device 100 can communicate with a network and another device by using a wireless communication technology.

The electronic device 100 implements a display function by using the GPU, the display 394, the application processor, and the like. The GPU is a microprocessor for image processing and is connected to the display 394 and the application processor. The GPU is configured to perform mathematical and geometric computation for graphic rendering. The processor 310 may include one or more GPUs that execute program instructions to generate or change display information.

The display 394 is configured to display an image, a video, or the like. The display 394 includes a display panel. The display panel may be a liquid crystal display (liquid crystal display, LCD), an organic light-emitting diode (organic light-emitting diode, OLED), an active-matrix organic light-emitting diode or an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In some embodiments, the electronic device 100 may include one or N displays 394. N is a positive integer greater than 1.

The electronic device 100 may implement an image shooting function by using the ISP, the camera 393, the video codec, the GPU, the display 394, the application processor, and the like. The ISP is configured to process data fed back by the camera 393. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, luminance, and complexion of the image. The ISP may further optimize parameters such as exposure and a color temperature of an image shooting scene. In some embodiments, the ISP may be disposed in the camera 393.

The camera 393 is configured to capture a static image or a video. An optical image of an object is generated through the lens, and is projected onto the photosensitive element. The photosensitive element may be a charge-coupled device (charge-coupled device, CCD) or a complementary metal-oxide-semiconductor (complementary metal-oxide-semiconductor, CMOS) phototransistor. The photosensitive element converts the optical signal into the electrical signal, and then transmits the electrical signal to the ISP for converting the electrical signal into a digital image signal. The ISP outputs the digital image signal to the DSP for processing. The DSP converts the digital image signal into an image signal in a standard format such as RGB or YUV. In some embodiments, the electronic device 100 may include one or N cameras 393. N is a positive integer greater than 1.

The camera 393 may include a time of flight (time of flight, TOF) camera, an RGB camera, and the like.

The TOF camera emits a near infrared ray that cannot be seen by human eyes, and receives light reflected by an object, so that the TOF camera converts a distance to the shot object by using a time difference or a phase difference between light emission and reflection, to form distance depth data. The RGB camera, namely, a red (R), green (G), and blue (B) three-color camera, may obtain, by changing three color channels of red (R), green (G), and blue (B) and superimposing three colors on each other, an image that includes a plurality of colors. In this embodiment of this application, the TOF camera and the RGB camera are configured to capture an eye image of a user. For example, when implementing an eye movement interaction function, the electronic device may control the TOF camera and/or the RGB camera to capture an image, and then perform an operation such as eye movement recognition or calibration based on the captured image, to implement an eye movement interaction function.

The digital signal processor is configured to process a digital signal, and may process another digital signal in addition to the digital image signal. For example, when the electronic device 100 selects a frequency, the digital signal processor is configured to perform Fourier transform on frequency energy.

The video codec is configured to compress or decompress a digital video. The electronic device 100 may support one or more types of video codecs. In this way, the electronic device 100 can play or record videos in a plurality of coding formats, for example, moving picture experts group (moving picture experts group, MPEG) 3, MPEG 2, MPEG 3, and MPEG 4.

The NPU is a neural-network (neural-network, NN) computing processor. The NPU quickly processes input information by using a structure of a biological neural network, for example, a transfer mode between human brain neurons, and may further continuously perform self-learning. Applications such as image recognition, intelligent awareness, voice recognition, and text understanding of the electronic device 100 may be implemented by using the NPU.

The external memory interface 320 may be configured to connect to an external storage card, for example, a micro SD card, to expand a storage capability of the electronic device 100. The external storage card communicates with the processor 310 by using the external storage interface 320, to implement a data storage function. For example, files such as music and a video are stored in the external memory card.

The internal memory 321 may be configured to store computer-executable program code. The executable program code includes instructions. The processor 310 runs the instructions stored in the internal memory 321, to perform various functional applications of the electronic device 100 and data processing. The internal memory 321 may include a program storage area and a data storage area.

The electronic device 100 may implement an audio function by using the audio module 370, the speaker 370A, the microphone 370C, the headset jack 370D, the application processor, and the like. For example, music playing and sound recording are implemented.

The sensor module 380 in the electronic device may include a pressure sensor 380A, a gyroscope sensor 380B, an acceleration sensor 380E, a distance sensor 380F, a fingerprint sensor 380H, the touch sensor 380K, an ambient light sensor 380L, and the like.

The pressure sensor 380A is configured to sense a pressure signal, and may convert the pressure signal into an electrical signal. In some embodiments, the pressure sensor 380A may be disposed on the display 394. There are a plurality of types of pressure sensors 380A, for example, a resistive pressure sensor, an inductive pressure sensor, and a capacitive pressure sensor. The capacitive pressure sensor may include at least two parallel plates made of conductive materials. When a force is applied to the pressure sensor 380A, capacitance between electrodes changes. The electronic device 100 determines pressure intensity based on the change of the capacitance. When a touch operation is performed on the display 394, the electronic device 100 detects intensity of the touch operation by using the pressure sensor 380A. The electronic device 100 may further calculate a touch location based on a detection signal of the pressure sensor 380A. In some embodiments, touch operations that are performed in a same touch location but have different touch operation intensity may correspond to different operation instructions. For example, when a touch operation whose touch operation intensity is less than a first pressure threshold is performed on a Messages application icon, an instruction for viewing an SMS message is executed. When a touch operation whose touch operation intensity is greater than or equal to a first pressure threshold is performed on a Messages application icon, an instruction for creating an SMS message is executed.

The gyroscope sensor 380B may be configured to determine a moving posture of the electronic device 100. In some embodiments, angular velocities of the electronic device 100 around three axes (namely, an x axis, a y axis, and a z axis) may be determined by using the gyroscope sensor 380B. The gyroscope sensor 380B may be configured to implement image stabilization during image shooting. For example, when the shutter is pressed, the gyroscope sensor 380B detects an angle at which the electronic device 100 jitters, calculates, based on the angle, a distance for which a lens module needs to compensate, and allows the lens to cancel the jitter of the electronic device 100 through reverse motion, to implement image stabilization. The gyroscope sensor 380B may be further used in a navigation scenario and a somatic game scenario.

The acceleration sensor 380E may detect accelerations in various directions (usually on three axes) of the electronic device 100. When the electronic device 100 is stationary, a magnitude and a direction of gravity may be measured. The acceleration sensor may be further configured to recognize a posture of the electronic device, and is used in screen switching between a landscape mode and a portrait mode, a pedometer, or another application.

The distance sensor 380F is configured to measure a distance. The electronic device 100 may measure a distance by using infrared or laser. In some embodiments, in an image shooting scene, the electronic device 100 may measure a distance by using the distance sensor 380F, to implement fast focusing.

The ambient light sensor 380L is configured to sense ambient light luminance. The electronic device 100 may adaptively adjust luminance of the display 394 based on the sensed ambient light luminance. The ambient light sensor 380L may be further configured to automatically adjust white balance during photographing. The ambient light sensor 380L may also cooperate with an optical proximity sensor 380G to detect whether the electronic device 100 is in a pocket, to prevent an accidental touch.

The fingerprint sensor 380H is configured to collect a fingerprint. The electronic device 100 may use a feature of the collected fingerprint to implement fingerprint-based unlocking, application lock access, fingerprint-based photographing, fingerprint-based call answering, and the like.

The touch sensor 380K is also referred to as a "touch panel". The touch sensor 380K may be disposed on the display 394. The touch sensor 380K and the display 394 form a touchscreen, also referred to as a "touch control screen". The touch sensor 380K is configured to detect a touch operation performed on or near the touch sensor 380K. The touch sensor may transfer the detected touch operation to the application processor to determine a type of a touch event. A visual output related to the touch operation may be provided by using the display 394. In some other embodiments, the touch sensor 380K may alternatively be disposed on a surface of the electronic device 100, and is at a location different from that of the display 394.

The button 390 includes a power-on button, a volume button, and the like. The button 390 may be a mechanical button, or may be a touch button. The electronic device 100 may receive a button input and generate a button signal input related to a user setting and function control of the electronic device 100.

The motor 391 may generate a vibration prompt. The motor 391 may be configured to provide an incoming call vibration prompt or a touch vibration feedback. For example, touch operations performed on different applications (for example, photographing and audio playing) may correspond to different vibration feedback effect. The motor 391 may also correspond to different vibration feedback effect for touch operations performed on different areas of the display 394. Different application scenarios (for example, a time reminder, information receiving, an alarm clock, and a game) may also correspond to different vibration feedback effect. Touch vibration feedback effect may be further customized.

The indicator 392 may be an indicator light, and may be configured to indicate a charging status and a power change, or may be configured to indicate a message, a missed call, a notification, and the like.

A software system of the electronic device 100 may use a layered architecture, an event-driven architecture, a micro-kernel architecture, a micro-service architecture, or a cloud architecture. In this embodiment of the present invention, an Android system of a layered architecture is used as an example to describe a software structure of the electronic device 100.

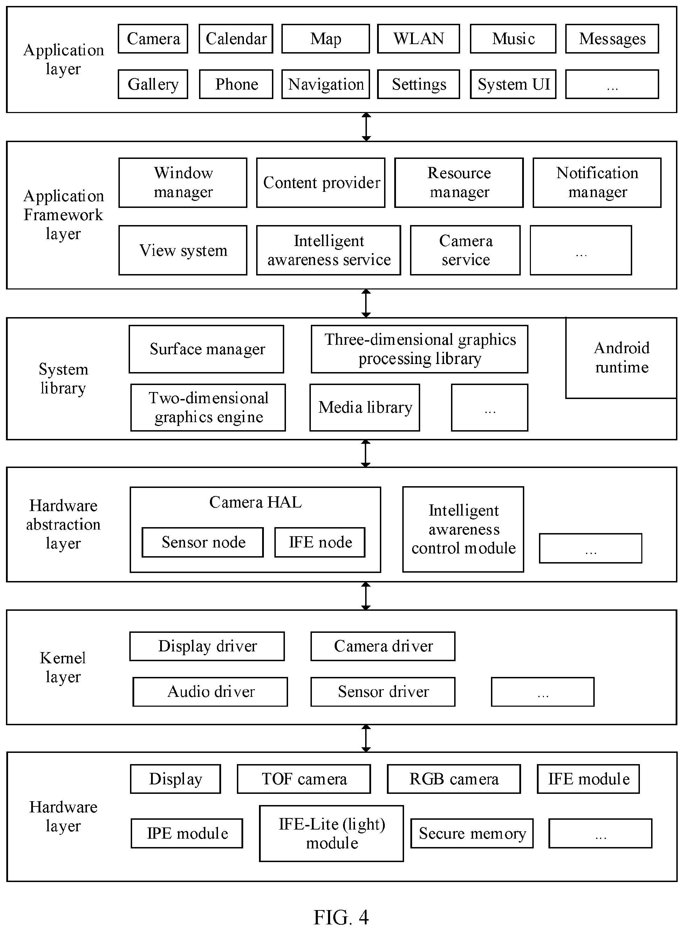

FIG. 4 is a block diagram of the software structure of the electronic device 100 according to an embodiment of the present invention.

In a layered architecture, software is divided into several layers, and each layer has a clear role and task. The layers communicate with each other by using a software interface. In some embodiments, the Android system may include, for example, an application layer, an application framework layer, an Android runtime (Android runtime) and a system library, a hardware abstraction layer (hardware abstraction layer, HAL), and a kernel layer. It should be noted that, in this embodiment of this application, the Android system is used as an example for description. In another operating system (for example, a HarmonyOS or an iOS), the solutions of this application can still be implemented provided that functions implemented by functional modules are similar to those in embodiments of this application.

The application layer may include a series of application packages.

As shown in FIG. 4, the application packages may include applications such as Camera, Gallery, Calendar, Phone, Map, Navigation, WLAN, Settings, a system user interface (user interface, UI), Music, and Messages.

The Settings application may enable or disable an intelligent awareness function. In response to a user operation of enabling the intelligent awareness function in the Settings application, the electronic device may capture an image, and recognize eye movement data of the user from the captured image, to implement eye movement interaction based on the eye movement data of the user. Optionally, in response to a user operation of enabling the intelligent awareness function in the Settings application, the electronic device may display a guide interface for eye movement calibration. The guide interface may include guide text information and a guide image or symbol that are used to guide the user to complete an eye movement calibration process, so that the user is guided to complete a specified eye movement action based on the guide text information and the guide image or symbol in the guide interface. After that, the electronic device may complete the eye movement calibration process based on the specified eye movement action completed by the user.

The application framework layer provides an application programming interface (application programming interface, API) and a programming framework for the application at the application layer. The application framework layer includes some predefined functions.

As shown in FIG. 4, the application framework layer may include a window manager, a content provider, a view system, a resource manager, a notification manager, an intelligent awareness service, a camera service, and the like.

The window manager is configured to manage a window program. The window manager may obtain a size of the display, determine whether there is a status bar, perform screen locking, take a screenshot, and the like.

The content provider is configured to: store and obtain data, and enable the data to be accessed by the application. The data may include a video, an image, an audio, calls that are made and answered, a browsing history and a bookmark, an address book, and the like.

The view system includes visual controls such as a control for displaying a text and a control for displaying a picture. The view system may be configured to construct an application. A display interface may include one or more views. For example, a display interface including a Messages notification icon may include a view for displaying a text and a view for displaying a picture.

The resource manager provides various resources such as a localized character string, an icon, a picture, a layout file, and a video file for the application.

The notification manager enables the application to display notification information in a status bar, and may be configured to convey a notification message. The notification manager may automatically disappear after a short pause without requiring user interaction. For example, the notification manager is configured to notify download completion, give a message notification, and the like. The notification manager may alternatively be a notification that appears in a top status bar of the system in a form of a graph or a scroll bar text, for example, a notification of an application that is run on a background, or may be a notification that appears on the screen in a form of a dialog window. For example, text information is displayed in the status bar, an announcement is given, the electronic device vibrates, or the indicator light blinks.

The intelligent awareness service is configured to process eye movement recognition and tracing requests sent by an application, and return a processing result to the application, to implement eye movement recognition and tracing functions.

The camera service is configured to manage work of the camera. For example, the camera may be controlled to be turned on or turned off, and parameters such as a resolution and a frame rate of the camera during image shooting may be controlled.

The Android runtime includes a kernel library and a virtual machine. The Android runtime is responsible for scheduling and management of the Android system.

The kernel library includes two parts: One part is a performance function that needs to be invoked in a Java language, and the other part is a kernel library of Android.

The application layer and the application framework layer run on the virtual machine. The virtual machine executes Java files of the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), a media library (Media Library), a three-dimensional graphics processing library (for example, OpenGL ES), and a two-dimensional (2D) graphics engine (for example, an SGL).

The surface manager is configured to manage a display subsystem and provide fusion of 2D and 3D image layers for a plurality of applications.

The media library supports playback and recording in a plurality of commonly used audio and video formats, static image files, and the like. The media library may support a plurality of audio and video encoding formats, for example, MPEG4, H.264, MP3, AAC, AMR, JPG, and PNG.

The three-dimensional graphics processing library is configured to implement three-dimensional graphics drawing, image rendering, composition, image layer processing, and the like.

The 2D graphics engine is a drawing engine for 2D drawing.

The hardware abstraction layer (hardware abstraction layer, HAL) is encapsulation of a Linux kernel driver program, provides an interface upward, and shields an implementation detail of hardware of a lower layer. The HAL may include a Camera HAL (Camera HAL), an intelligent awareness control module, and the like.

The Camera HAL is a core software framework of the Camera, and the Camera HAL may include a sensor node (sensor node) and an image front end (image front end, IFE) node (IFE node). The sensor node and the IFE node are components (nodes) in an image data and control instruction transmission path (also referred to as a transmission pipeline) created by the Camera HAL.

The intelligent awareness control module is a core software application of intelligent awareness. The intelligent awareness control module includes an intelligent awareness client application (client application, CA), and the intelligent awareness CA runs in an REE environment.

Intelligent awareness trusted application (trusted application, TA) is an application that runs in a TEE environment and that is used for intelligent awareness.

The kernel layer is a layer between hardware and software. The kernel layer includes at least a display driver, a camera driver, an audio driver, and a sensor driver.

The camera driver is a driving layer of a Camera component, and is mainly responsible for interaction with camera hardware.

A hardware layer includes the display, the TOF camera, the RGB camera, an IFE module, an IPE module, an IFE-Lite module, and a secure memory (Secure Buffer).

The image front end (image front end, IFE) module may perform image processing such as AE or AWB on image data.

The light image front end (IFE-Lite) module is a simplified version of the IFE module, may be configured to forward image data, and do not process the image data in a forwarding process.

The image processing engine (image processing engine, IPE) module mainly includes two parts: an NPS and a PPS, and is configured to perform image processing such as hardware noise reduction, clipping, noise reduction, color processing, and detail enhancement on an image. For example, the hardware noise reduction includes processing such as multi-frame noise reduction (multi-frame noise, MFNR) and multi-frame super resolution (multi-frame super resolution, MFSR).

The secure memory is a memory with a security protection function, and may be used to store image data collected by the TOF camera and the RGB camera. In some embodiments, after an image obtained by the TOF camera is forwarded by the IFE-Lite module, the image is stored in the secure memory. An image captured by the RGB camera may be pre-processed by the IFE module, and then the IPE module sends a processed image to the secure memory.

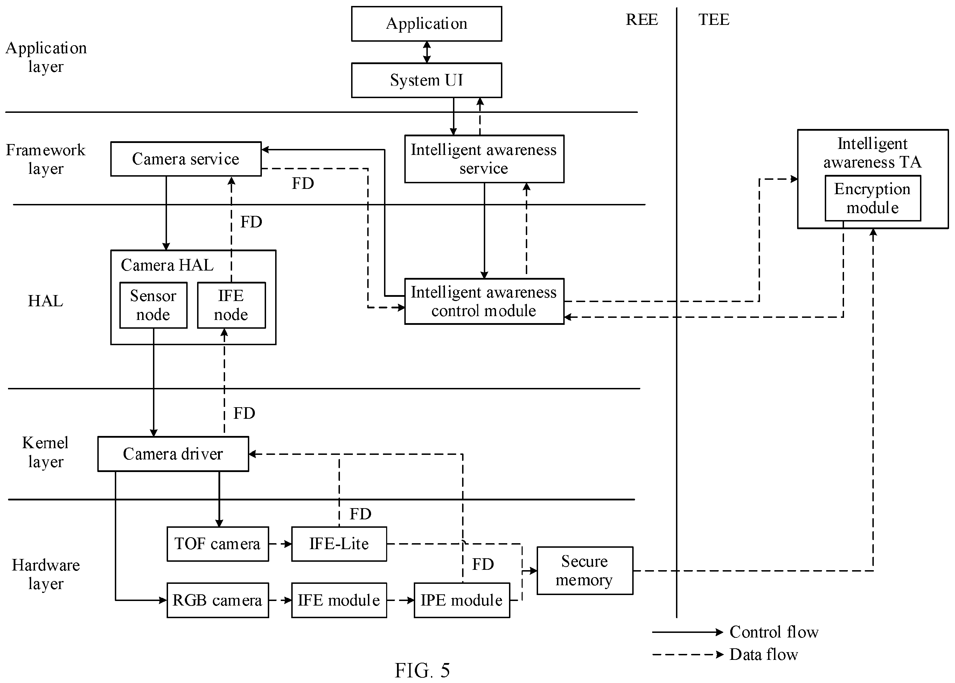

With reference to FIG. 5, the following describes interaction between software modules used in the method according to embodiments of this application.

As shown in FIG. 5, an application, a system UI, an intelligent awareness service, an intelligent awareness control module, a camera service, a Camera HAL, a camera driver, a TOF camera, an RGB camera, an IFE-Lite, an IFE module, an IPE module, and a secure memory in an electronic device are located on an REE side, and an intelligent awareness TA in the electronic device is located on a TEE side.

The system UI in an application layer may interact with the intelligent awareness service in a framework layer. The system UI may interact with the intelligent awareness service by invoking a preset application programming interface (application programming interface, API) interface.

The intelligent awareness service in the framework layer interacts with the intelligent awareness control module in a HAL.

The intelligent awareness control module in the HAL interacts with the camera service in the framework layer. The intelligent awareness control module may interact with the camera service by invoking an interface (vendor native development kit, VNDK).

The camera service in the framework layer interacts with the Camera HAL in the HAL. The Camera HAL may include a sensor node and an IFE node. The sensor node interacts with the camera driver in a kernel layer, and the IFE node may also interact with the camera driver in the kernel layer. The camera driver may be configured to drive the TOF camera or the RGB camera in a hardware layer to collect image data in a preset operating mode (for example, an eye movement tracking collection mode).

The IFE-Lite module may forward the image data collected by the TOF camera to the secure memory for storage. The IPE module may forward the image data collected by the RGB camera to the secure memory for storage.

The camera driver may also be configured to: obtain, from the IFE-Lite module, a file descriptor (file descriptor, FD) of the image data collected by the TOF camera, and/or obtain, from the IPE module, an FD of the image data collected by the RGB camera. The FD is used to indicate a storage location of the image data collected by the TOF camera or the RGB camera in the secure memory.

Then, the camera driver sends the FD to the IFE node of the Camera HAL, the IFE node may send the FD to the camera service, and the camera service may send the FD to the intelligent awareness control module. The intelligent awareness control module sends the FD to the intelligent awareness TA on the TEE side. The intelligent awareness TA may read the image data from the secure memory based on the FD. After an encryption module in the intelligent awareness TA performs encryption processing on the image data, the intelligent awareness TA sends encrypted image data to the intelligent awareness control module on the REE side. An encryption key may also be transmitted between the intelligent awareness TA and the intelligent awareness control module. The intelligent awareness control module may decrypt the encrypted image data by using the key, and perform eye movement recognition and tracking based on decrypted image data, to obtain eye movement data of a user. The intelligent awareness control module sends the eye movement data to the intelligent awareness service, and the intelligent awareness service sends the eye movement data to the system UI. The system UI determines a gaze point and a gaze action of the user based on the eye movement data, and performs, based on the gaze action of the user, an operation on an interaction object corresponding to the gaze point.

Solid-line arrows in the figure may be used to indicate a control flow, and dashed-line arrows may be used to indicate a data flow.

Optionally, after reading the image data from the secure memory based on the FD, the intelligent awareness TA on the REE side may alternatively perform eye movement recognition and tracking on the read image data to obtain eye movement data of a user. Then, the intelligent awareness TA sends the eye movement data to the intelligent awareness control module, and the intelligent awareness control module sends the eye movement data to the intelligent awareness service. The intelligent awareness service finally sends the eye movement data to the system UI, so that the system UI can determine a gaze point and a gaze action of the user based on the eye movement data, and perform, based on the gaze action of the user, an operation on an interaction object corresponding to the gaze point. This may ensure security of eye movement recognition.

An embodiment of this application provides a message processing method. The message processing method may be applied to an electronic device including a front-facing camera. The front-facing camera is a camera on a same side as a display of the electronic device, so that the front-facing camera can obtain an eye image of a user when the user gazes at the display.

Optionally, the method may be further applied to an electronic device connected to an eye movement detection device. The electronic device may obtain eye movement information of the user by using the eye movement detection device. The eye movement detection device may include, for example, smart glasses, an eye movement detector, or a non-worn image capturing apparatus.

First, the electronic device enables an eye movement interaction function. There are a plurality of manners of starting the function by the electronic device, for example, the eye movement recognition function may be enabled in response to a triggering operation of the user (for example, a touch operation, a voice operation, or a gesture operation, and this is not limited).

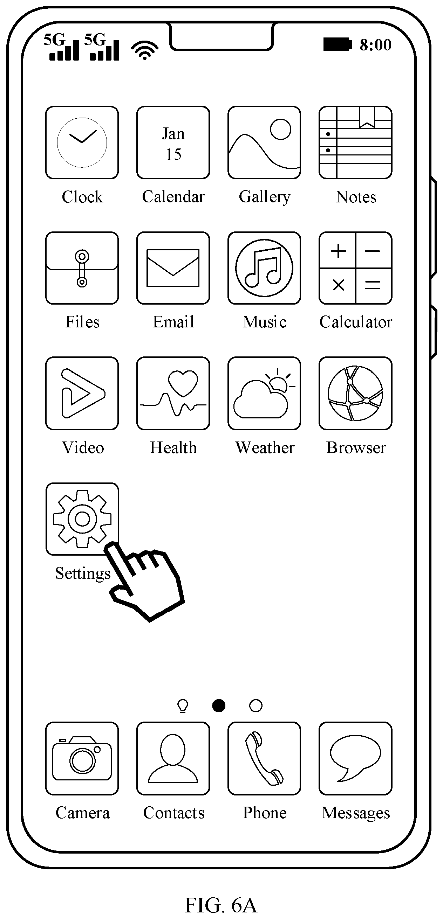

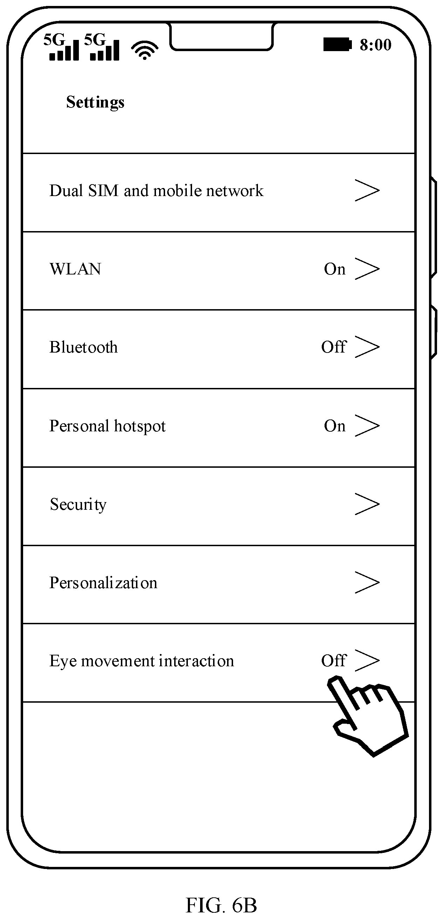

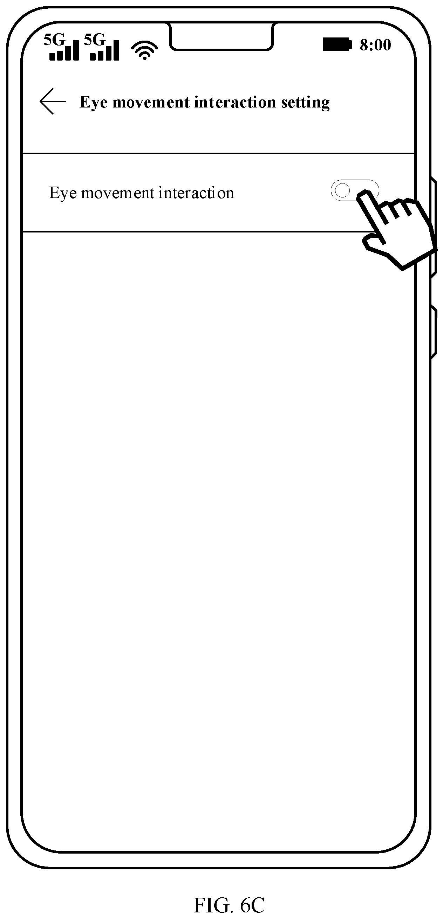

In some embodiments, as shown in FIG. 6A, an interface displayed by the electronic device includes a plurality of application icons. In response to a tap operation performed by the user on a Settings application icon, the electronic device displays a setting interface shown in FIG. 6B, and setting options displayed in the setting display interface include eye movement interaction. An operation bar corresponding to the eye movement interaction in the setting interface may display an enable status of the eye movement interaction function. As shown in FIG. 6B, turn-off is displayed in the operation bar corresponding to the eye movement interaction, which indicates that the electronic device does not enable the eye movement interaction function. After detecting a tap operation performed by the user on an eye movement interaction setting option, the electronic device displays an eye movement interaction setting interface shown in FIG. 6C. The eye movement interaction setting interface includes an on/off button for enabling the eye movement interaction function. An on/off button shown in FIG. 6C indicates that the eye movement interaction function is not enabled. After detecting a tap operation performed by the user on the on/off button shown in FIG. 6C, the electronic device may enable the eye movement interaction function.

After the eye movement interaction function is enabled, the electronic device performs eye movement calibration. In some implementations, the electronic device performs eye movement calibration after the eye movement interaction function is enabled each time. In some other implementations, the electronic device periodically (for example, one month, one week, or the like) performs eye movement calibration. In some other implementations, the electronic device performs eye movement calibration after the eye movement interaction function is enabled for a first time. Specific actuality and a calibration frequency for performing eye movement calibration by the electronic device is not limited in this application.

In some embodiments, the electronic device may store eye movement calibration data of the user. After recognizing current eye movement data of the user based on a captured image, the electronic device may determine a gaze point location of the user based on the eye movement calibration data and the current eye movement data. The eye movement calibration data is obtained based on a known location that is in the display of the electronic device and at which the user gazes, and is used to indicate a relationship between eye movement data of the user and a location of a gaze point at which the user gazes at the display.

In some examples, after detecting that the user enables the on/off button for enabling the eye movement interaction function, the electronic device may determine whether the eye movement calibration data is stored in the electronic device.

In response to that the eye movement calibration data is stored in the electronic device, the electronic device may obtain image data, recognize eye movement data of the user from the image data, and then determine a current gaze coordinate point of the user based on the eye movement calibration data and the eye movement data. Specifically, the electronic device may recognize a viewing direction of eyes of the user from the image data, and then determine, based on a relationship that is indicated by the eye movement calibration data and that is between the eye movement data of the user and a physical location in the display, the location of the gaze point at which the user looks at the display. For example, the electronic device may recognize the viewing direction of the eyes of the user from the image data, and then determine, based on the relationship that is indicated by the eye movement calibration data and that is between the eye movement data of the user and the physical location in the display, the location of the gaze point at which the user looks at the display.

In response to that the eye movement calibration data is not stored in the electronic device, the electronic device may display an eye movement calibration interface, to guide the user to complete an eye movement calibration process, to obtain the eye movement calibration data of the user. Specifically, the electronic device may display a guide interface for eye movement calibration. The guide interface may include guide text information and a guide image or symbol that are used to guide the user to complete the eye movement calibration process, so that the user is guided to complete a specified eye movement action based on the guide text information and the guide image or symbol in the guide interface. After that, the electronic device may complete the eye movement calibration process based on the specified eye movement action completed by the user.

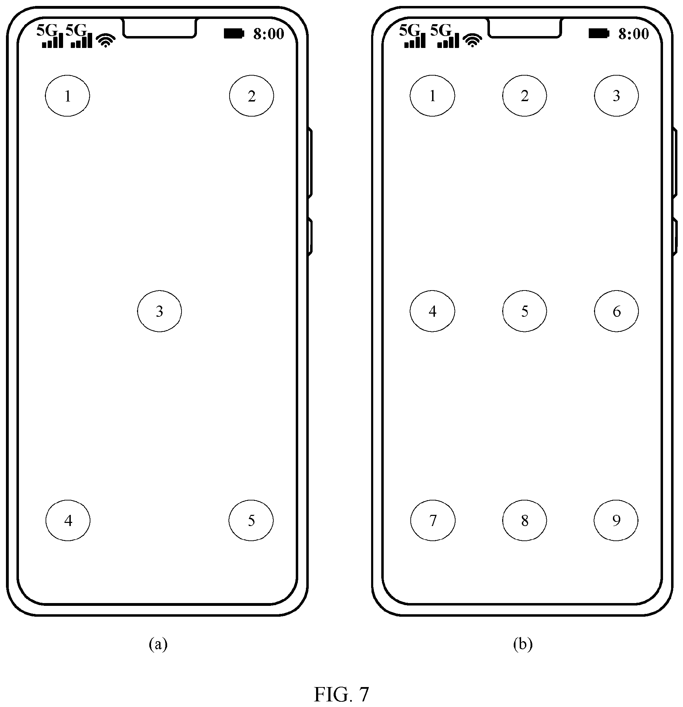

For example, guide text information may be displayed on a first guide interface displayed by the electronic device. Then, calibration circles corresponding to a guide text and a guide image or symbol are displayed on a second guide interface displayed by the electronic device. For example, the first guide interface may display guide text information: Gaze, until the interface displays that eye movement calibration is completed, at calibration circles sequentially displayed on a screen. Then, in the second guide interface displayed by the electronic device, a calibration circle 1, a calibration circle 2, a calibration circle 3, a calibration circle 4, and a calibration circle 5 shown in (a) in FIG. 7 may be sequentially displayed in a preset order. In response to that the user gazes, for more than first calibration duration, at the calibration circle displayed on the screen, the electronic device cancels displaying of the calibration circle, and continues to display, until all calibration circles are displayed on the screen, a calibration circle that is in the five calibration circles and that is not displayed. For another example, the first guide interface may display guide text information: All calibration circles are displayed on the screen. Keep eyes, until all the calibration circles turn green, on white circles. Then, the second guide interface displayed by the electronic device may display a calibration circle 1, a calibration circle 2, a calibration circle 3, a calibration circle 4, a calibration circle 5, a calibration circle 6, a calibration circle 7, a calibration circle 8, and a calibration circle 9 that have no fill colors and that are shown in FIG. 7(b). The electronic device may sequentially change a color of one calibration circle to white in a preset order. In response to a gaze action of the user on a calibration white circle, the electronic device turns the color of the calibration white circle into green. In response to that all the calibration circles turn green, the electronic device may display a third guide interface for indicating an eye movement calibration completion result.

In some examples, after detecting that the user disables the on/off button for enabling the eye movement interaction function, the electronic device may retain the eye movement calibration data stored in the electronic device. Then, the electronic device detects again that the user enables the on/off button for enabling the eye movement interaction function, that is, the eye movement interaction function may be implemented based on the stored eye movement calibration data.

Optionally, after detecting that the user disables the on/off button for enabling the eye movement interaction function, the electronic device may delete the eye movement calibration data stored in the electronic device. Then, after detecting again that the user enables the on/off button for enabling the eye movement interaction function, the electronic device may obtain the eye movement calibration data again.

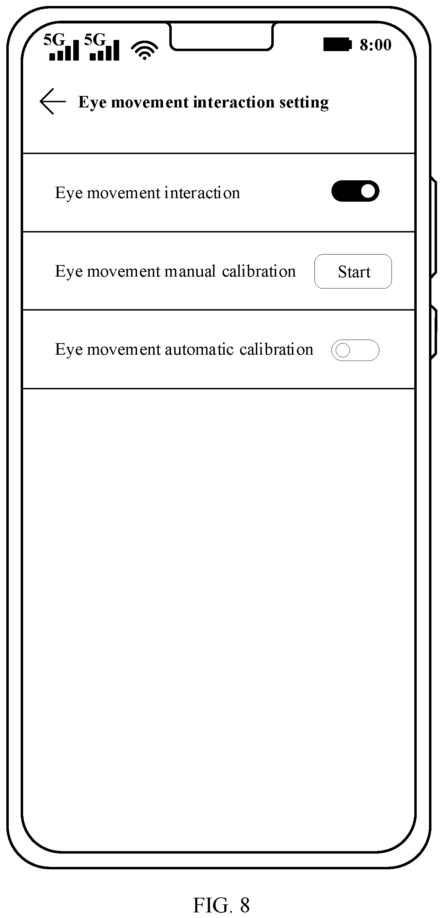

In some examples, after detecting a tap operation performed by the user on the on/off button shown in FIG. 6C, the electronic device may display an eye movement interaction setting interface shown in FIG. 8. The eye movement interaction setting interface includes options such as eye movement interaction, eye movement manual calibration, and eye movement automatic calibration. The eye movement interaction setting interface further includes an on/off button that corresponds to the eye movement interaction option and that is in an on state, a start button corresponding to the eye movement manual calibration option, and an on/off button corresponding to the eye movement automatic calibration option.

The start button corresponding to the eye movement manual calibration option is used to start the eye movement calibration process. In response to a tap operation performed by the user on the start button, the electronic device may start the eye movement calibration process, to obtain the eye movement calibration data of the user. For a specific eye movement calibration process, refer to the foregoing embodiment. Details are not described herein again.

After the electronic device detects the tap operation performed by the user on the on/off button shown in FIG. 6C, in the eye movement interaction setting interface shown in FIG. 8, the on/off button corresponding to the eye movement automatic calibration option may be in a default off state.

In response to a tap operation performed by the user on the on/off button corresponding to the eye movement automatic calibration option shown in FIG. 8, the electronic device may change a status of the on/off button corresponding to the eye movement automatic calibration option from the off state to an on state, and perform automatic calibration according to a preset rule. For example, the electronic device may obtain a location of a gaze point at which the user looks at the display and that has been determined in a preset time period, and an actual location of an eye movement interaction object. Then, the electronic device updates the stored eye movement calibration data based on the gaze point location and the actual location of the corresponding interaction object.

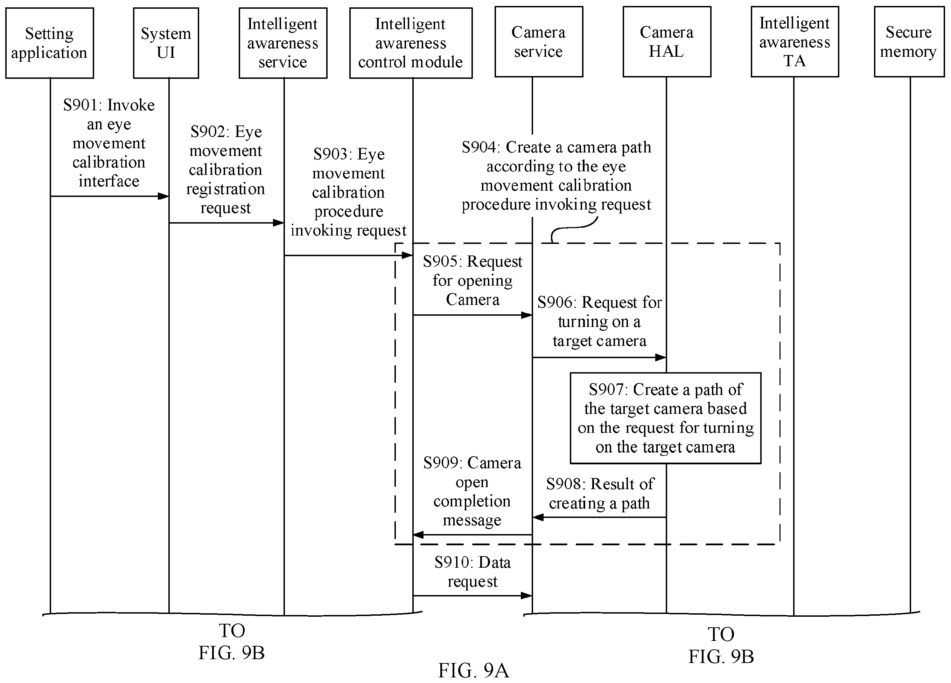

In some instances, in the eye movement calibration process, the electronic device may establish an eye movement calibration channel by using step S901 to step S904. FIG. 9A shows step S901 to step S904.

S901: A Settings application invokes an eye movement calibration interface of a system UI, to trigger an eye movement calibration procedure.

In some embodiments, in response to that the user enables the on/off button corresponding to eye movement interaction in FIG. 6C, or in response to a tap operation performed by the user on a Start control that is in FIG. 8 and that is used to start eye movement manual calibration, the Settings application may invoke the eye movement calibration interface of the system UI, so that the system UI may trigger the eye movement calibration procedure.

Optionally, an application that supports eye movement interaction and that is in the electronic device may trigger an eye movement calibration process by invoking the eye movement calibration interface of the system UI. In addition, the system UI includes an eye movement interaction whitelist and/or an eye movement interaction blacklist. The eye movement interaction whitelist is used to indicate an application that can invoke the eye movement calibration interface, and the eye movement interaction blacklist is used to indicate an application that cannot invoke the eye movement calibration interface.

For example, a setting interface that is displayed by the electronic device and that is of an application A supporting eye movement interaction may include an on/off button for displaying eye movement interaction. In response to that the user enables the on/off button, the application A may invoke the eye movement calibration interface of the system UI.

S902: The system UI sends an eye movement calibration registration request to an intelligent awareness service.

The eye movement calibration registration request is used to request the intelligent awareness service to perform eye movement calibration, to obtain an eye movement calibration result.

In some embodiments, the eye movement calibration registration request includes an eye movement calibration fence. The eye movement calibration fence creates a virtual boundary around a display area of the display. When the user gazes at an area inside the virtual boundary, the electronic device may calibrate eye movement information of the user.

S903: The intelligent awareness service sends an eye movement calibration procedure invoking request to an intelligent awareness control module.

In addition, the system UI may further register a callback with the intelligent awareness service, and a function of registering the callback is that after obtaining the eye movement calibration result, the intelligent awareness service may return the eye movement calibration result to the system UI.

In other words, the system UI may notify, by using the intelligent awareness service, the intelligent awareness control module of performing an eye movement calibration operation. The intelligent awareness service may send the eye movement calibration result obtained from the intelligent awareness control module to the system UI.

S904: In response to receiving the eye movement calibration procedure invoking request, the intelligent awareness control module creates a camera path according to the eye movement calibration procedure invoking request.

Specifically, the intelligent awareness control module may obtain, from the eye movement calibration procedure invoking request, a camera start quantity, an ID for indicating a camera, and image parameters such as a resolution, a frame rate, and a data flow format that are used to indicate an image output by the camera.

It should be understood that, in an electronic device startup process, a camera service may send a camera query request to a Camera HAL, and the camera query request is used to request to query a camera supported in an electronic device running process. After receiving the camera query request, the Camera HAL may send data of the camera supported by the electronic device to the camera service, and the camera service may store the received data of the camera supported by the electronic device. The data of the camera supported by the electronic device includes information such as a camera identity (identity, ID), a type, and a location of each camera, and a maximum resolution, a frame rate, and a data flow format that are supported by each camera.

For example, the electronic device includes three cameras, an ID of one front-facing TOF camera is A, an ID of one front-facing RGB camera is B, and an ID of one rear-facing camera is C, where the rear-facing camera C and the display are separately on a same side of the electronic device. The intelligent awareness control module may send the camera query request to the camera service. The camera service sends the data of the camera supported by the electronic device to the intelligent awareness control module. The intelligent awareness control module may determine a target camera based on the data of the camera supported by the electronic device, for example, may determine that the target camera is a camera whose ID is A and a camera whose ID is B.

Optionally, as shown in FIG. 9A, step S904 in which in response to receiving the eye movement calibration procedure invoking request, the intelligent awareness control module creates the camera path according to the eye movement calibration procedure invoking request may include the following steps (S905-S909).

S905: The intelligent awareness control module sends, to the camera service, a request for opening Camera.

The request for opening the Camera includes data of the target camera.

For example, the intelligent awareness control module may send, to the camera service by using a vendor native development kit (vendor native development kit, VNDK) interface, the request for opening the Camera. The request for opening the Camera may include information such as a camera ID, and a resolution, a frame rate, and a data flow format of an image output by the camera.

S906: In response to receiving a request for turning on the target camera, the camera service sends the request for turning on the target camera to the Camera HAL.

The request for turning on the target camera carries flow configuration information, and the flow configuration information is used to create a path for transmitting a data flow and a control flow. The flow configuration information includes an ID for indicating the camera and image parameters such as a resolution, a frame rate, and a data flow format that are used to indicate an image output by the camera.

In addition, the camera service may register a callback with the Camera HAL, and the callback is used to enable the Camera HAL to notify the camera service of a result of creating the path.

S907: The Camera HAL creates a path of the target camera based on the request for turning on the target camera.

The Camera HAL includes a sensor node and an IFE node. The sensor node is configured to send the data of the target camera to a camera driver, and the IFE node may obtain an FD of image data collected by the target camera. The request for turning on the target camera includes data of the TOF camera and data of the RGB camera, the data of the TOF camera includes the ID of the TOF camera and a working sequence of the TOF camera, and the data of the RGB camera includes the ID of the RGB camera and a working sequence of the RGB camera. The camera driver may configure a working sequence to a register of the target camera by using an I2C bus based on the camera ID, so that the target camera can work based on the working sequence in the register.

Specifically, the sensor node in the Camera HAL may send the data of the TOF camera to the camera driver, and the camera driver may configure the working sequence of the TOF camera to a register of the TOF camera. The TOF camera collects image data based on the working sequence in the register corresponding to the TOF camera, and the image data is written, for storage, into a secure memory through forwarding of an IFE-Lite module. The IFE-Lite module may further send an FD corresponding to the image data to the IFE node in the Camera HAL by using the camera driver. The sensor node in the Camera HAL may send the data of the RGB camera to the camera driver, and the camera driver may configure the working sequence of the RGB camera to a register of the RGB camera. The RGB camera collects image data based on the working sequence in the register corresponding to the RGB camera. 3A statistics and raw2yuv conversion processing are performed on the image data by using an IFE module. After obtained image data is scaled by an IPE module based on a preset resolution, processed image data is sent to the secure memory for storage. The IPE module may further send an FD corresponding to the image data to the IFE node in the Camera HAL by using the camera driver.

For example, the sensor node sends, to the camera driver module at a kernel layer, flow configuration information of an eye movement calibration mode carried in the request for turning on the target camera. The camera driver writes or updates a configuration parameter in the flow configuration information to registers of the TOF camera and the RGB camera. Then, the camera driver sends start instructions to the TOF camera and the RGB camera, so that the TOF camera and the RGB camera collect image data. In response to receiving the start commands, the TOF camera and the RGB camera start to collect the image data.

Then, the TOF camera sends a captured TOF RAW image to the IFE-Lite module. The IFE-Lite module sends the TOF RAW image to the secure memory, and sends a first FD corresponding to the TOF RAW image to the IFE node by using the camera driver. The RGB camera first sends a captured RGB RAW image to the IFE module for 3A statistics and raw2yuv conversion processing, and then sends a processed image to the IPE module for scaling based on a preset resolution, to obtain a processed RGB image. The IPE module sends the processed RGB image to the secure memory, and sends a second FD corresponding to the processed RGB image to the IFE node by using the camera driver.

Optionally, hard synchronization may be implemented between the TOF camera and the RGB camera, to ensure accuracy of eye movement calibration. Specifically, the TOF camera and the RGB camera may be connected through a connection cable, the RGB camera is set as a master (master) camera module, and the TOF camera is set as a slave (slave) camera module. In this way, the RGB camera outputs a part field synchronization signal (xvs) to the TOF camera.

S908: The Camera HAL returns, to the camera service, the result of creating the path.

The result of creating the path may be a success or a failure. If the result of creating the path is the failure, the Camera HAL notifies the camera service of a path creation failure. If the result of creating the path is the success, the Camera HAL notifies the camera service that the path is successfully created, and S909 and a subsequent step of S909 may continue to be performed.

S909: In response to receiving a notification that the path is successfully created, the camera service returns, to the intelligent awareness control module, a Camera open completion message.

That the Camera is opened means that preparations (for example, preparations such as camera parameter configuration and a power-on preparation) made before the Camera performs photographing or video shooting are completed.

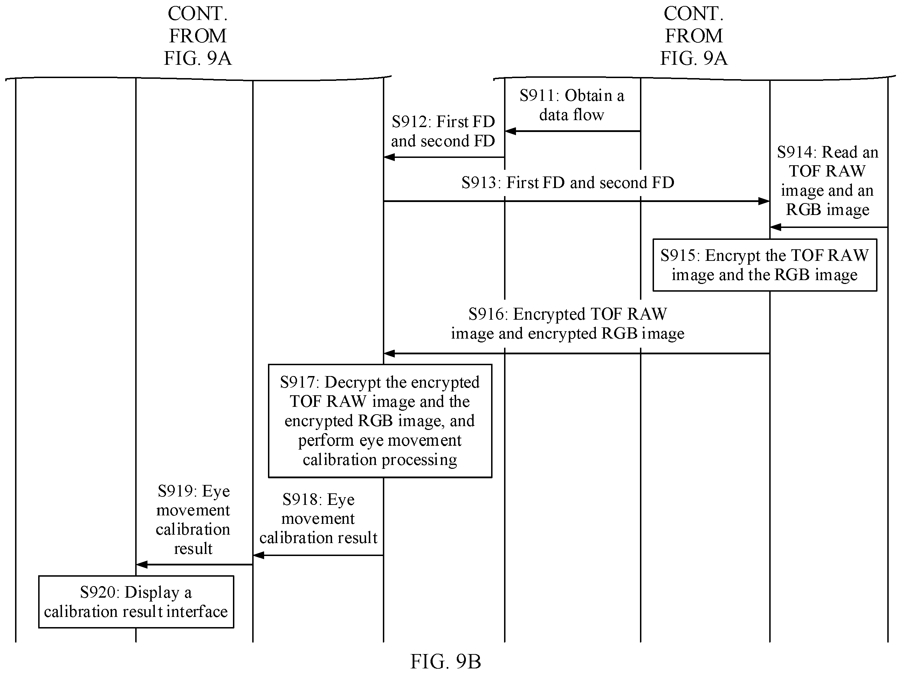

Then, the electronic device may perform eye movement calibration based on the established eye movement calibration channel. When a guide interface is displayed, for example, the calibration circle shown in (a) in FIG. 7 or (b) in FIG. 7 is displayed on a display interface according to a preset rule, the electronic device may perform eye movement calibration by using the following steps (step S910 to step S920 shown in FIG. 9A and FIG. 9B).

S910: In response to receiving the Camera open completion message, the intelligent awareness control module sends a data request to the camera service.

The data request is used to request a data flow, that is, to obtain FDs/the FD sent by the IFE-Lite module and/or the IPE module.

S911: In response to receiving the data request sent by the intelligent awareness control module, the camera service invokes the Camera HAL to obtain the data flow.

The data flow may include the first FD and the second FD. For example, the camera driver may send the first FD and the second FD to the IFE node in the Camera HAL, and the IFE node sends the first FD and the second FD to the camera service by using an interface of the Camera HAL.

S912: The camera service sends the first FD and the second FD to the intelligent awareness control module.

S913: The intelligent awareness control module sends the first FD and the second FD to an intelligent awareness TA.

S914: The intelligent awareness TA reads the TOF RAW image and the RGB image from the secure memory based on the first FD and the second FD.

S915: The intelligent awareness TA encrypts the TOF RAW image and the RGB image.

The intelligent awareness TA includes an encryption module. The encryption module is configured to encrypt the TOF RAW image and the RGB image based on a key, to ensure that the TOF RAW image and the RGB image are not intercepted, modified, or the like by a malicious program after leaving a TEE side, thereby ensuring accuracy of eye movement calibration.

S916: The intelligent awareness TA sends an encrypted TOF RAW image and an encrypted RGB image to the intelligent awareness control module.

In some embodiments, the intelligent awareness TA may further synchronously send the key to the intelligent awareness control module, so that the intelligent awareness control module can decrypt the encrypted TOF RAW image and the encrypted RGB image based on the key.

S917: The intelligent awareness control module decrypts the encrypted TOF RAW image and the encrypted RGB image, and performs eye movement calibration processing based on the TOF RAW image and the RGB image.

The intelligent awareness control module may obtain preset calibration data. The intelligent awareness control module may perform eye movement recognition on the TOF RAW image and the RGB image, to recognize coordinates of a gaze point of the user. Then, the intelligent awareness control module compares the coordinates of the gaze point of the user with coordinates of an expected gaze point in the preset calibration data, and determines a current eye movement calibration result of the user based on a comparison result.

For example, the intelligent awareness control module may calculate a distance between the coordinates of the gaze point of the user and the coordinates of the expected gaze point in the preset calibration data. If the distance is less than or equal to a preset distance, it is indicated that a difference between the actual gaze point of the user and the expected gaze point is not large, and the eye movement calibration result is that calibration succeeds. If the distance is greater than a preset distance, it is indicated that a difference between the actual gaze point of the user and the expected gaze point is large, and the eye movement calibration result is that calibration fails.

Optionally, the intelligent awareness control module includes a TOF image processing unit, a face detection and key point extraction unit, an eye movement calibration unit, and an eye movement recognition unit.

For example, the TOF image processing unit may process a 2-phase TOF RAW image obtained by the TOF camera, and output a TOF infrared radiation (infrared radiation, IR) image whose resolution is 640*480, and a corresponding auto exposure (auto exposure, AE) time. The TOF IR image output by the TOF image processing unit or an RGB image whose resolution is 1024*768 output by the RGB camera is input into the face detection and key point extraction unit. After performing face detection on the TOF IR image or the RGB image, the face detection and key point extraction unit may output a face area rectangular box and a face key point array.

The eye movement calibration unit may input 5 pieces of preset calibration point information (pixel) or 9 pixels (a quantity of pixels is not limited in this application), and correspondingly obtain 10 consecutive TOF IR images and 10 RGB images based on each calibration point. Then, the eye movement calibration unit may input a face region rectangular box and a face key point array that are in each picture and that are obtained through processing performed by the face detection and key point extraction unit on each picture, a current resolution and a physical size (PPI) of the display of the electronic device, and a physical deviation of a calibration IR/RGB relative to an origin (which may be an upper left corner of the display) in the display interface of the display. After that, the eye movement calibration unit may correspondingly output 5*10 or 9*10 16-dimensional float (float) type calibration feature vectors.

In the eye movement recognition unit, a face area rectangle box and a face key point array in a single picture, the 5*10 or 9*10 16-dimensional float type calibration feature vectors, the current resolution and the physical size (PPI) of the display of the electronic device, and the physical deviation of the calibration IR/RGB relative to the origin (which may be the upper left corner of the display) in the display interface of the display are input. Then, the eye movement recognition unit may output a gaze point location that is based on the origin in the display interface of the display for reference.

S918: The intelligent awareness control module sends the eye movement calibration result to the intelligent awareness service.

The intelligent awareness control module may transfer the eye calibration result to the intelligent awareness service based on a callback previously registered with the intelligent awareness service.

S919: The intelligent awareness service sends the eye movement calibration result to the system UI.

Similarly, the intelligent awareness service may transfer the eye movement calibration result to the system UI based on a callback previously registered with the system UI.

S920: The system UI displays a calibration result interface based on the eye movement calibration result.

The system UI may display the calibration result interface based on the eye movement calibration result, to prompt the user whether calibration is completed. If the eye movement calibration result is that calibration fails, the displayed calibration result interface may include a Restart eye movement calibration control. If the eye movement calibration result is that calibration succeeds, the displayed calibration result interface may include an eye movement interaction authorization interface. The eye movement interaction authorization interface may include an application that supports eye movement interaction and an Authorize control corresponding to each application. In response to a tap operation performed by the user on an Authorize control, the electronic device may add a corresponding application to the eye movement interaction whitelist.

Optionally, in the foregoing eye movement calibration process, after the intelligent awareness TA reads the TOF RAW image and the RGB image from the secure memory based on the first FD and the second FD, the intelligent awareness TA may perform eye movement calibration processing based on the TOF RAW image and the RGB image, and then send an eye movement calibration result to the intelligent awareness control module. The intelligent awareness control module sends the eye movement calibration result to the intelligent awareness service, and the intelligent awareness service sends the eye movement calibration result to the system UI. The system UI displays a calibration result interface based on the eye movement calibration result.

In some examples, if the eye movement calibration result is that calibration fails, the calibration result interface displayed by the system UI may include an identifier for indicating that calibration fails, and a Start control for re-performing eye movement calibration, to remind the user that eye movement calibration fails this time. The user may re-execute a calibration process by tapping the Start control for re-performing eye movement calibration. If the eye movement calibration result is that calibration succeeds, the calibration result interface displayed by the system UI may include an identifier for indicating that calibration succeeds, to remind the user that eye movement calibration succeeds.

Optionally, when an application that supports eye movement interaction runs or enables an eye movement interaction function for a first time, the electronic device may prompt the user to perform an authorization operation. For example, the electronic device may display an authorization interface, and the authorization interface may include an Authorize control and a Never authorize control. In response to the user tapping the Authorize control in an authorization prompt, the electronic device may add the application to the eye movement interaction whitelist. In response to that the user taps the Never authorize control in an authorization prompt, the electronic device may add the user to the eye movement interaction blacklist.

After the eye movement calibration succeeds, the electronic device may display a specific interface on the system UI, and may determine an interaction object in response to detecting that the user gazes at a target area. Then, the electronic device performs a corresponding operation on the interaction object based on detected gaze duration of the user on the target area.

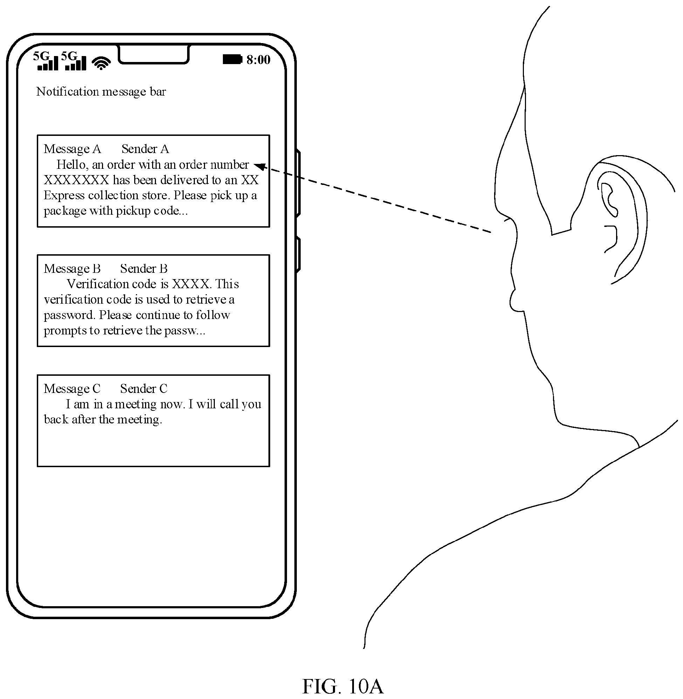

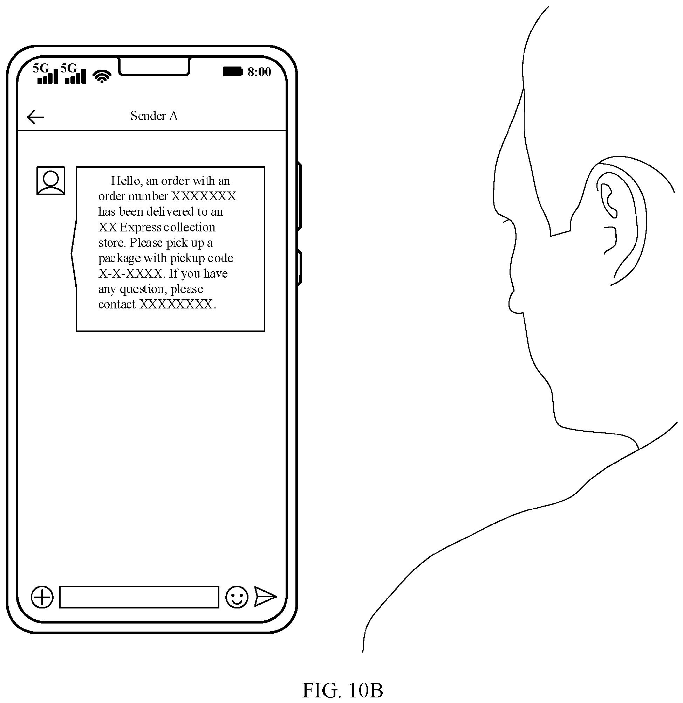

For example, as shown in FIG. 10A, a pull-down notification bar displayed in a display interface includes a display area of a message A, a display area of a message B, and a display area of a message C. When the user wants to open an application interface corresponding to the message A, to completely display content corresponding to the message A, the user may gaze at the area corresponding to the message A in the interface. Then, the electronic device recognizes, by using an eye movement recognition process, a gaze action of gazing at the display area of the message A by the user. In response to the gaze action of the user, the electronic device obtains a link corresponding to the message A, and performs an open operation on the link corresponding to the message A. As shown in FIG. 10B, the display of the electronic device displays content in the link corresponding to the message A.

Optionally, a gaze area in the display page may be divided based on an actual operation performed on application display content.

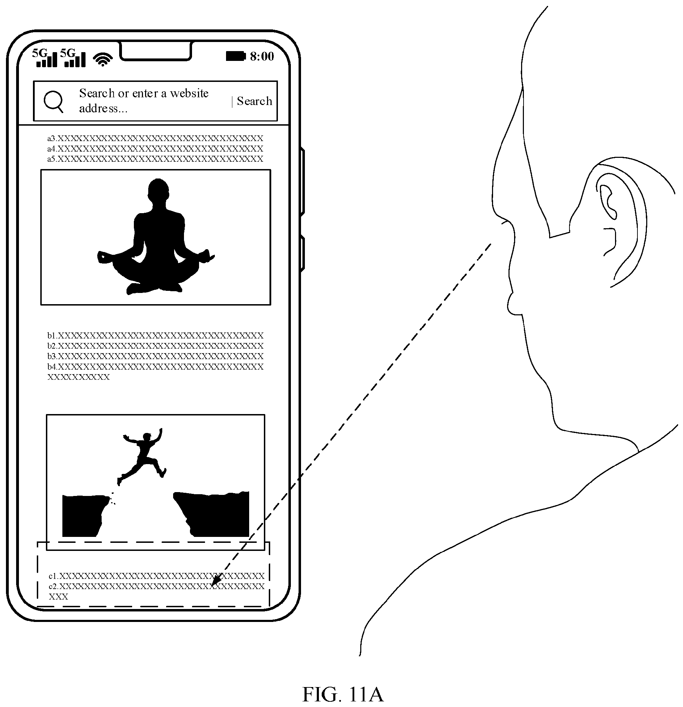

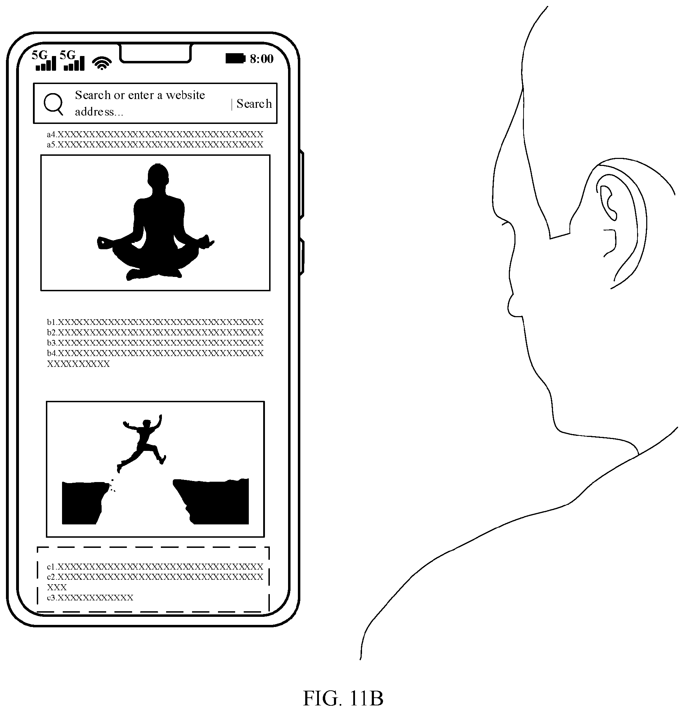

In some examples, a web page may be displayed in the electronic device, and the electronic device may recognize eye movement of the user. When it is recognized that eye movement data of the user is gazing at a lower page-turning area in a lower part of the web page, for example, a dashed-line box shown in FIG. 11A, the electronic device may switch the currently displayed web page to a next page. A manner of switching a web page by the electronic device may be sliding switching or page-turning switching. During sliding switching, the electronic device may determine a sliding switching amplitude based on duration in which the user gazes at the lower page-turning area. For example, as shown in FIG. 11A, if the user gazes at the lower page-turning area for 1 s, the electronic device may slide the entire current page up one row, so that a first row of the current page is not displayed in a display area, and a first row of a next page is connected to a last row of the current page, as shown in FIG. 11B, thereby implementing sliding page turning. During page-turning switching, the electronic device may replace the current page with content of a next page after gaze duration of the user reaches a preset gaze threshold.

The lower page-turning area covers content displayed on the web page. It may be understood that the lower page-turning area may cover the content displayed on the web page in a transparent layer manner, so that the user can see content of a part that is of the web page and that is covered by the lower page-turning area. The lower page-turning area may alternatively cover the content displayed on the web page in an opaque layer or a translucent layer manner. In this way, the user can intuitively perceive existence of the lower page-turning area, so that the user can gaze at the lower page-turning area only when page turning needs to be performed, to avoid page turning caused by a misoperation.

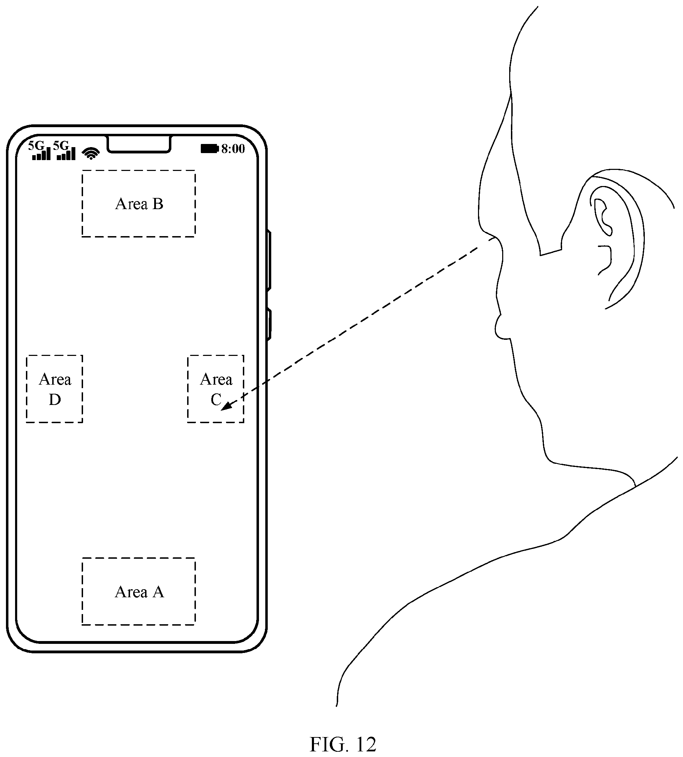

In some examples, the display page of the electronic device is an e-book page or a short video playing page. As shown in FIG. 12, the display interface includes a lower area A, an upper area B, a right area C, and a left area D. In the e-book page, an eye movement operation area in the e-book page may be determined based on a page turning manner set by the user. For example, if the page turning manner set by the user is sliding page turning, the area A in a lower part of the display page is a lower page-turning gaze area, and the area B is an upper page-turning gaze area. If the page-turning manner set by the user is switching page turning, the area A in a lower part of the display page may be a lower page-turning gaze area, and the area B is an upper page-turning gaze area; or the area C in a right part of the display page may be a lower page-turning gaze area, and the area D in a left part of the display page is an upper page-turning gaze area. If the display page is the short video playing page, the area A in a lower part of the display page is a next video switching gaze area, and the area B is a previous video switching gaze area.

After an eye movement calibration process is completed, and an eye movement calibration result is a success, the electronic device may trigger, in a preset scenario or in a case that a triggering event occurs, an eye movement-based human-computer interaction display process.

The preset scenario may include, for example, a scenario in which the electronic device receives a new notification message, a scenario in which an application that supports eye movement interaction starts, or a scenario in which an interface that supports eye movement interaction is displayed on the display interface of the electronic device. Alternatively, the triggering event may include, for example, an event in which the electronic device receives a new notification message, an event in which an application that supports eye movement interaction starts, or an event in which an interface that supports eye movement interaction is displayed on the display interface of the electronic device.

For example, after receiving a new notification message, the electronic device may display the notification message in a pull-down notification bar, as shown in FIG. 10A. Then, the electronic device may invoke an eye movement recognition interface of the system UI. The electronic device displays a web page corresponding to a Browser application, or displays a reading page corresponding to a E-book application, and may also invoke the eye movement recognition interface of the system UI.

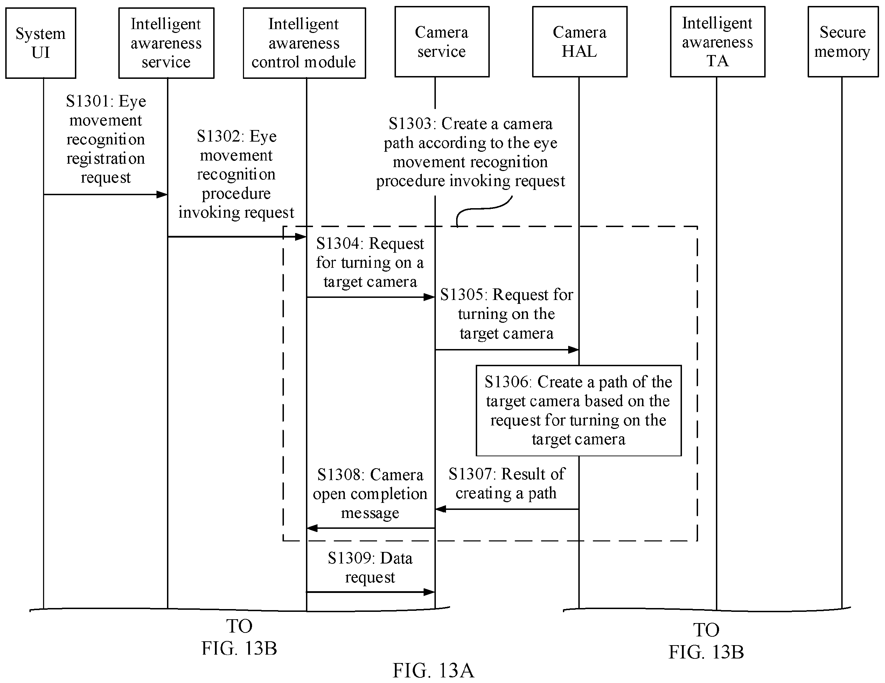

After invoking the eye movement recognition interface of the system UI, the electronic device may establish an eye movement recognition channel by using steps S1301 to S1303 shown in FIG. 13A, to complete an eye movement recognition process based on the eye movement recognition channel, and implement eye movement-based human-computer interaction.

S1301: The system UI sends an eye movement recognition registration request to the intelligent awareness service.

The eye movement recognition registration request includes an eye movement recognition fence. The eye movement recognition fence creates a virtual boundary around the display area of the display. When the user gazes at an area inside the virtual boundary, the electronic device may recognize the eye movement information of the user.

The electronic device may determine the eye movement recognition fence based on a preset scenario or a triggering event for invoking an eye movement recognition interface of the system UI, or may obtain the eye movement recognition fence carried in a preset scenario or a triggering event. For example, if the preset scenario is that a message is displayed in a pull-down menu bar of a notification message, a corresponding eye movement recognition fence is an area for displaying the notification message in the pull-down menu bar, for example, display areas corresponding to the message A, the message B, and the message C in FIG. 10A. If the triggering event is that the web page of the Browser application is displayed on the display interface of the electronic device, the triggering event may send an eye movement recognition fence corresponding to a reading interface, for example, the dashed-line box area in FIG. 11A and FIG. 11B.

S1302: The intelligent awareness service sends an eye movement recognition procedure invoking request to the intelligent awareness control module.

In addition, the system UI may further register a callback with the intelligent awareness service. A function of registering the callback is that after obtaining an eye movement recognition result, the intelligent awareness service may return the eye movement recognition result to the system UI. In other words, the system UI may notify, by using the intelligent awareness service, the intelligent awareness control module of performing an eye movement recognition operation. The intelligent awareness service may send the eye movement recognition result obtained from the intelligent awareness control module to the system UI.

S1303: In response to receiving the eye movement recognition procedure invoking request, the intelligent awareness control module creates a camera path according to the eye movement recognition procedure invoking request.

In some examples, the intelligent awareness control module may obtain current ambient light data, and determine current ambient light luminance based on the current ambient light data, and then determine, based on the current ambient light luminance, an ID of a camera that needs to be turned on. For example, the intelligent awareness control module may determine, based on a control relationship between ambient light luminance and a camera, a target camera that needs to be turned on under the current ambient light luminance.

For example, there is a case that the electronic device includes three cameras, an ID of one front-facing TOF camera is A, an ID of one front-facing RGB camera is B, and an ID of one rear-facing camera is C, where the rear-facing camera C and the display are separately on a same side of the electronic device. In addition, the control relationship obtained by the intelligent awareness control module is as follows: For example, if the current ambient light luminance is greater than 100 lux (lux), the RGB camera is controlled to be turned on; or if the current ambient light luminance is less than or equal to 100 lux, the TOF camera is controlled to be turned on. In this case, when learning that the current light luminance is 50, the intelligent awareness control module may control the TOF camera to be turned on.

It may be understood that, in a case that the current ambient light luminance is less than or equal to 100 lux, compared with an image captured by the TOF camera, an image captured by the RGB camera is inaccurate. However, in a case that the current ambient light luminance is greater than 100 lux, accuracy of an image captured by the RGB camera is relatively high, and there is no need to turn on the TOF camera to capture an image. Therefore, the control relationship between the ambient light luminance and the camera in the foregoing example is obtained. An actually obtained control relationship may be determined according to an actual requirement. This is not limited herein.

Optionally, the intelligent awareness control module may obtain current ambient light data at a specific time interval, and change a camera path based on latest obtained ambient light luminance, to ensure that a currently opened camera path can accurately recognize eye movement, and reduce running costs of the camera path, for example, power consumption and resource occupation.

For example, the intelligent awareness control module may obtain current ambient light luminance every 2 s, and determine, based on latest obtained ambient light luminance, a camera path that needs to be created or a camera path that needs to be closed. For example, the intelligent awareness control module has created a TOF camera path, that is, the TOF camera is turned on. In this case, when detecting that current ambient light luminance is 150 lux, the intelligent awareness control module may control the currently opened TOF camera path to be closed, and create an RGB camera path.

In this way, real-time synchronization between a currently enabled camera path and current ambient light luminance can be enabled, so that the currently enabled camera path can capture a more accurate image, and accuracy of eye movement recognition is further ensured.

In some examples, when receiving the eye movement recognition procedure invoking request, the intelligent awareness control module may first create two paths of the TOF camera and the RGB camera, that is, simultaneously turn on the TOF camera and the RGB camera, so that the TOF camera and the RGB camera simultaneously start to collect image data. Then, the intelligent awareness control module may recognize, based on the image data collected by the RGB camera and the TOF camera, whether there is a reflective obstruction to the eyes of the user, for example, recognize whether the user wears glasses, or recognize that there is a reflective obstruction between the eyes of the user and the camera.

The intelligent awareness control module may include a face recognition unit. The face recognition unit may recognize feature information of the eyes on a face based on the image data collected by the RGB camera and the TOF camera. If the feature information recognized by the face recognition unit matches an image feature of wearing glasses, it may be considered that the user wears the glasses. In addition, if the face recognition unit recognizes that there is a preset quantity of reflective points on the face of the user except for a pupil area, it may be considered that there is the reflective obstruction between the eyes of the user and the camera.

The intelligent awareness control module recognizes whether there is a reflective obstruction to the eyes of the user, and may further control the camera path based on ambient light luminance. For example, if the intelligent awareness control module recognizes that there is the reflective obstruction to the eyes of the user, it may be determined whether current ambient light luminance is greater than a preset ambient light luminance threshold. In response to that the current ambient light luminance is greater than the preset ambient light luminance threshold, the intelligent awareness control module may control the TOF camera path to be closed, and keep the RGB camera path in an open state. In response to that the current ambient light luminance is less than or equal to the preset ambient light luminance threshold, the intelligent awareness control module may control the TOF camera path to remain open, and control the RGB camera path to be in a close state. If the intelligent awareness control module recognizes that there is no reflective obstruction to the eyes of the user, the TOF camera path may be controlled to be closed, and the RGB camera path is kept in an open state.

Optionally, as shown in FIG. 13A, step S1303 in which in response to receiving the eye movement recognition procedure invoking request, the intelligent awareness control module creates the camera path according to the eye movement recognition procedure invoking request may include the following steps (S1304-S1308).

S1304: The intelligent awareness control module sends, to the camera service, a request for turning on the target camera.

The request for turning on the target camera includes data of the target camera.

For example, the intelligent awareness control module may send, to the camera service by using the VNDK interface, the request for turning on the target camera. The request for turning on the target camera carries information such as a resolution and a data flow format.

In addition, the intelligent awareness control module may register a callback with the camera service. Registering the callback is to notify, after the camera service completes turning-on of the target camera, the intelligent awareness control module that an operation of turning on the target camera is completed.

S1305: In response to receiving the request for turning on the target camera, the camera service sends the request for turning on the target camera to the Camera HAL.

The request for turning on the target camera carries flow configuration information, and the flow configuration information is used to create a path for transmitting a data flow and a control flow. The flow configuration information includes an ID for indicating the camera and image parameters such as a resolution, a frame rate, and a data flow format that are used to indicate an image output by the camera.

In addition, the camera service may register a callback with the Camera HAL, and the callback is used to enable the Camera HAL to notify the camera service of a result of creating the path.

S1306: The Camera HAL creates a path of the target camera based on the request for turning on the target camera.

The Camera HAL may send the data of the target camera to the camera driver by using the sensor node, and obtain, by using the IFE node, an FD of image data collected by the target camera. The data of the target camera includes an ID of the target camera and a working sequence of the target camera. The camera driver configures a working sequence to a register of the target camera by using an I2C bus based on the camera ID, so that the target camera can work based on the working sequence in the register.

In some TOF camera path examples, the sensor node in the Camera HAL may send data of the TOF camera to the camera driver, and the camera driver may configure a working sequence of the TOF camera to a register of the TOF camera. The TOF camera collects image data based on the working sequence in the register corresponding to the TOF camera, and the image data is written, for storage, into the secure memory through forwarding of the IFE-Lite module. The IFE-Lite module may further send an FD corresponding to the image data to the IFE node in the Camera HAL by using the camera driver.

In some RGB camera path examples, the sensor node in the Camera HAL may send data of the RGB camera to the camera driver, and the camera driver may configure a working sequence of the RGB camera to a register of the RGB camera. The RGB camera collects image data based on the working sequence in the register corresponding to the RGB camera. 3A statistics and raw2yuv conversion processing are performed on the image data by using the IFE module. After obtained image data is scaled by the IPE module based on a preset resolution, processed image data is sent to the secure memory for storage. The IPE module may further send an FD corresponding to the image data to the IFE node in the Camera HAL by using the camera driver.

For example, the sensor node sends, to the camera driver module at the kernel layer, flow configuration information of an eye movement recognition mode carried in the request for turning on the target camera. The camera driver writes or updates a configuration parameter in the flow configuration information to registers/the register of the TOF camera and/or the RGB camera. Then, the camera driver sends start instructions/a start instruction to the TOF camera and/or the RGB camera, so that the TOF camera and/or the RGB camera collect/collects image data. In response to receiving the start command, the TOF camera and/or the RGB camera start/starts to collect the image data.

Then, the TOF camera sends a captured TOF RAW image to the IFE-Lite module. The IFE-Lite module sends the TOF RAW image to the secure memory, and sends a first FD corresponding to the TOF RAW image to the camera driver. The RGB camera first sends a captured RGB RAW image to the IFE module for 3A statistics and raw2yuv conversion processing, and then sends a processed image to the IPE module for scaling based on a preset resolution, to obtain a processed RGB image. The IPE module sends the processed RGB image to the secure memory, and sends a second FD corresponding to the processed RGB image to the camera driver.

Optionally, the camera driver may send a configuration parameter write completion message to the sensor node. In response to receiving the configuration parameter write completion message, the sensor node sends a start command to the camera driver module.

S1307: The Camera HAL returns, to the camera service, the result of creating the path.

The result of creating the path may be a success or a failure. If the result of creating the path is the failure, the Camera HAL notifies the camera service of a path creation failure. If the result of creating the path is the success, the Camera HAL notifies the camera service that the path is successfully created, and S1308 and a subsequent step of S1308 may continue to be performed.

S1308: In response to receiving a notification that the path is successfully created, the camera service returns, to the intelligent awareness control module, a Camera open completion message.

It may be understood that, that the Camera is opened means that preparations such as camera parameter configuration and a power-on preparation made before the Camera performs photographing or video shooting are completed.

Then, the electronic device may perform eye movement recognition based on the established eye movement recognition channel, and implement human-computer interaction based on eye movement recognition.

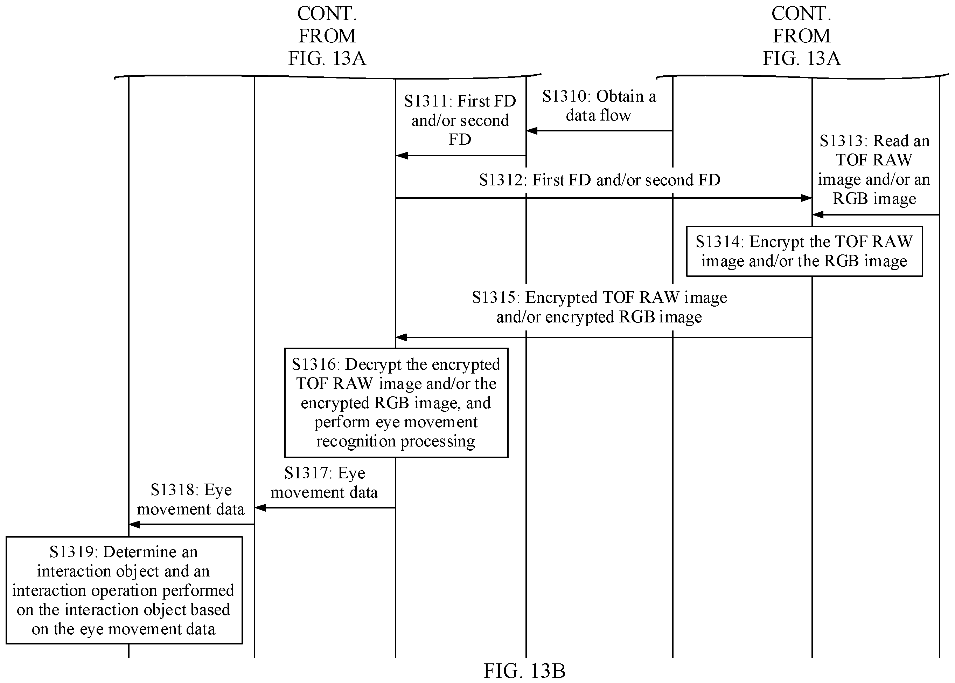

For example, step S1309 to step S1319 shown in FIG. 13A and FIG. 13B are as follows.

S1309: In response to receiving the Camera open completion message, the intelligent awareness control module sends a data request to the camera service.

The data request is used to request to obtain FDs/the FD sent by the IFE-Lite module and/or the IPE module.

S1310: In response to receiving the data request sent by the intelligent awareness control module, the camera service invokes the Camera HAL to obtain the data flow.

The data flow may include the first FD and/or the second FD. For example, the camera driver may send the first FD and/or the second FD to the IFE node. The IFE node sends the first FD and/or the second FD to the camera service by using an interface of the Camera HAL.

S1311: The camera service sends the first FD and/or the second FD to the intelligent awareness control module.

S1312: The intelligent awareness control module sends the first FD and/or the second FD to the intelligent awareness TA.

S1313: The intelligent awareness TA correspondingly reads the TOF RAW image and/or the RGB image from the secure memory based on the first FD and/or the second FD.

S1314: The intelligent awareness TA encrypts the TOF RAW image and/or the RGB image.

The intelligent awareness TA includes an encryption module, configured to encrypt the TOF RAW image and/or the RGB image based on a key, to ensure that the TOF RAW image and/or the RGB image are/is not maliciously intercepted, modified, or the like after leaving the TEE side on which the intelligent awareness TA is located, thereby ensuring accuracy of eye movement recognition data.

S1315: The intelligent awareness TA sends an encrypted TOF RAW image and/or an encrypted RGB image to the intelligent awareness control module.

In some embodiments, the intelligent awareness TA may further send the key to the intelligent awareness control module, so that the intelligent awareness control module can decrypt the encrypted TOF RAW image and/or the RGB image based on the key.

S1316: The intelligent awareness control module decrypts the encrypted TOF RAW image and/or the encrypted RGB image, and performs eye movement recognition processing based on the TOF RAW image and/or the RGB image.

The intelligent awareness control module may perform eye movement recognition on the TOF RAW image and/or the RGB image, to recognize eye movement data of the user. The eye movement data may include data such as coordinates of a gaze point and gaze duration.

S1317: The intelligent awareness control module sends the eye movement data to the intelligent awareness service.

The intelligent awareness control module may transfer the eye movement data to the intelligent awareness service based on a callback previously registered with the intelligent awareness service.

S1318: The intelligent awareness service sends the eye movement data to the system UI.

Similarly, the intelligent awareness service may transfer the eye movement data to the system UI based on a callback previously registered with the system UI.

S1319: The system UI determines an interaction object and an interaction operation performed on the interaction object based on the eye movement data.

The eye movement data may include the coordinates of the gaze point and the gaze duration. The system UI may determine, based on the coordinates of the gaze point in the eye movement data, an object at which the user gazes, namely, the interaction object. After confirming the interaction object, the system UI may further perform a corresponding interaction operation on the interaction object based on the gaze duration.

Optionally, after the intelligent awareness TA reads the TOF RAW image and/or the RGB image from the secure memory based on the first FD and/or the second FD, the intelligent awareness TA may perform eye movement recognition processing based on the TOF RAW image and/or the RGB image, and then send the eye movement data to the intelligent awareness control module. The intelligent awareness control module sends the eye movement data to the intelligent awareness service, and the intelligent awareness service sends the eye movement data to the system UI. The system UI determines the interaction object and the interaction operation performed on the interaction object based on the eye movement data.

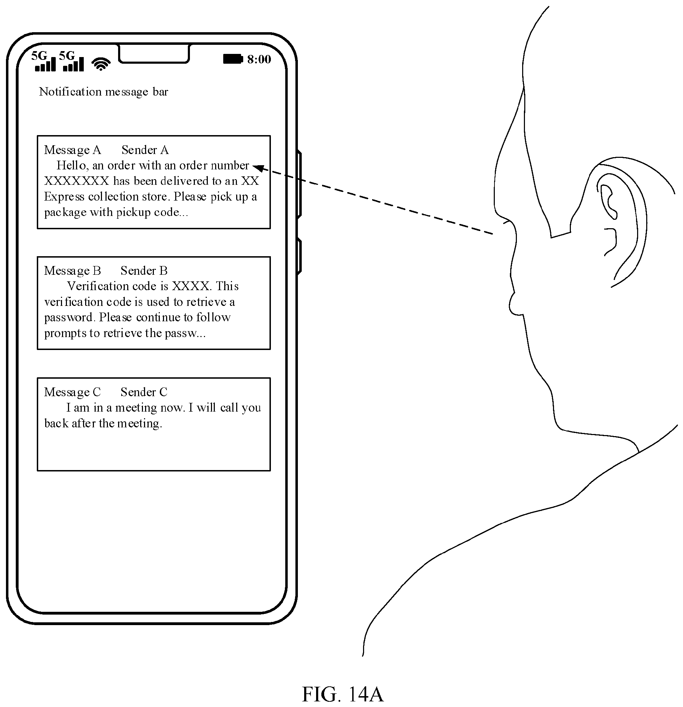

When eye movement interaction is performed, in some examples, when the object at which the user gazes is a long notification message that is displayed in a folded manner, as shown in FIG. 14A, the electronic device may perform an unfolding operation on the folded long notification message by using gaze duration of the user on an area in which the long notification message is located. When a quantity of characters in content of a notification message is greater than a preset character threshold, the electronic device may consider that the notification message is a long notification message, and display the long notification message in a folded manner.

Specifically, when the electronic device displays a newly received long notification message in a folded manner in a first specified area in the display interface, the electronic device starts to recognize eye movement of the user, and determines, based on an eye movement recognition result, whether the user gazes at the first specified area displayed by the long notification message in first preset duration. An area of the first specified area is less than an area of a display area in a pull-down notification message bar.

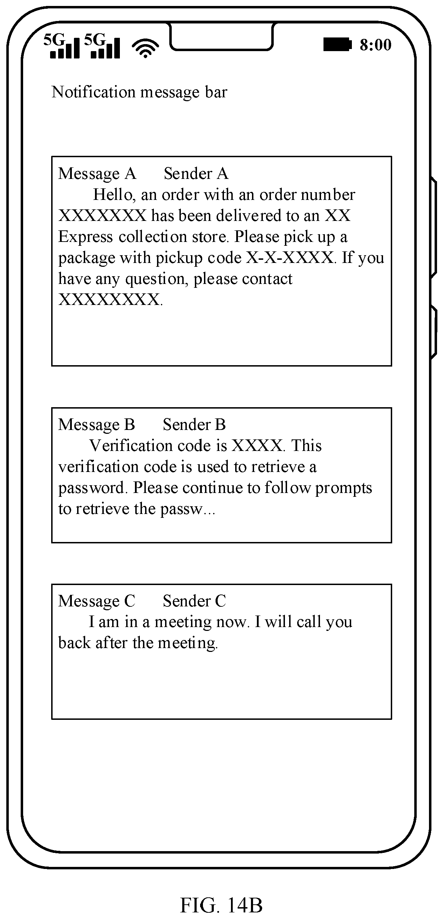

In response to that the user gazes at the first specified area displayed by the long notification message in the first preset duration, that is, when the electronic device determines, based on the eye movement recognition result, that a gaze location of the user is in the first specified area, the electronic device obtains, based on the eye movement recognition result, gaze duration of the user on the specified area. If the gaze duration of the user on the specified area exceeds a first preset gaze duration threshold, the electronic device may consider that the user wants to perform an interactive operation on the interaction object, and may display an unfolded long notification message in a second specified area in the display interface, and cancel folding displaying of the first specified area, as shown in FIG. 14B. The second specified area is larger than the first specified area.

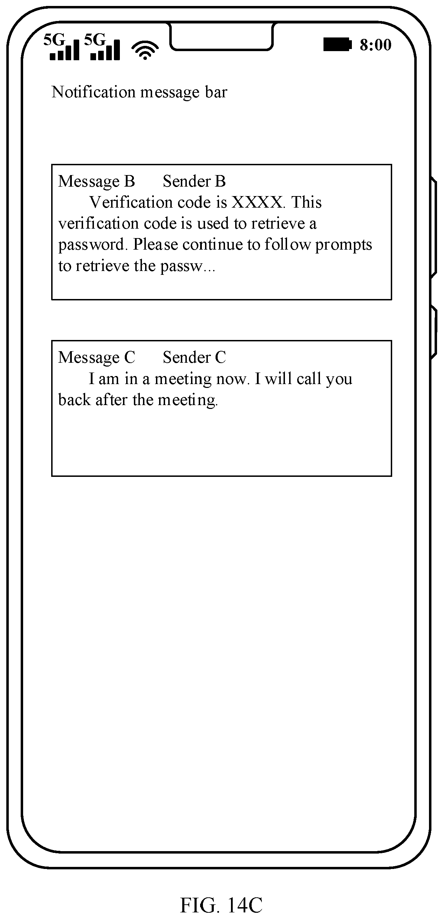

In addition, if the electronic device determines based on eye movement recognition, after displaying the unfolded long notification message in the second specified area in the display interface, that the user does not gaze at the second specified area, the electronic device may cancel displaying of the long notification message in the notification message bar, as shown in FIG. 14C. Alternatively, the electronic device cancels unfolding displaying of the long notification message in the second specified area, and the long notification message is re-displayed in a folded manner in the first specified area, as shown in FIG. 14A.

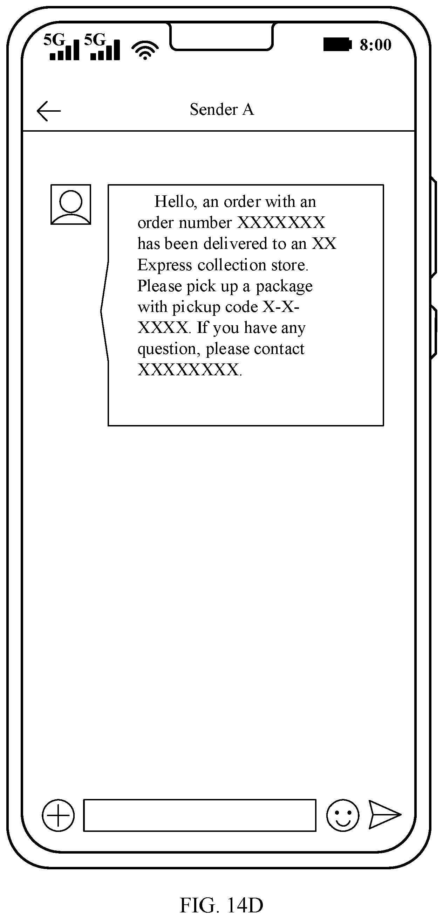

In addition, if the electronic device determines based on eye movement recognition, after displaying the unfolded long notification message in the second specified area in the display interface, that duration in which the user gazes at the second specified area is greater than a second preset gaze duration threshold, it may be considered that the user wants to open an application that sends the long notification message. In this case, the electronic device may open the application corresponding to the long notification message. As shown in FIG. 14B, if duration in which the user gazes at the second specified area corresponding to a message A is greater than a second preset gaze duration threshold, a display interface shown in FIG. 14D may be displayed. The long notification message and the application may include, for example, that an SMS notification message corresponds to a Messages application, a video update notification message corresponds to a video application, and a music recommendation notification message corresponds to a music player application. This is not limited herein.

Optionally, when opening the application corresponding to the long notification message, the electronic device may first obtain a link corresponding to the long notification message. The link may be a link for opening an interface on which content of the long notification message may be displayed. Alternatively, the link may be a link for opening an interface on which the long message notification is used as a subject, and content in the long message notification is not necessarily included in the interface.

In response to that the user does not gaze at the first specified area in the first preset duration, or duration in which the user gazes at the first specified area does not exceed a first preset gaze duration threshold, the electronic device may consider that the user is not interested in the long notification message, that is, does not intend to perform an interactive operation, and the electronic device may cancel folding displaying of the first specified area after duration in which the long notification message is displayed in a folded manner in the first specified area in the display interface exceeds second preset duration.

Optionally, when the object at which the user gazes is a short notification message that is not displayed in a folded manner, an interactive operation may be performed on the short notification message by using gaze duration of the user on an area in which the short notification message is located. When a quantity of characters in content of a notification message is less than or equal to a preset character threshold, the electronic device may consider that the notification message is a short notification message.

Specifically, when the electronic device displays a newly received short notification message in a first specified area in the display interface, the electronic device starts to recognize eye movement of the user, and determines, based on an eye movement recognition result, whether the user gazes at a third specified area displayed by the short notification message in third preset duration.

In response to that the user gazes at the third specified area displayed by the short notification message in the third preset duration, that is, when the electronic device determines, based on the eye movement recognition result, that a gaze location of the user is in the third specified area, the electronic device obtains, based on the eye movement recognition result, continuous gaze duration of the user on the third specified area. If the continuous gaze duration of the user on the third specified area exceeds a third preset gaze duration threshold, the electronic device may consider that the user wants to perform an interactive operation on the short notification message, and may display, on the display interface, an application interface corresponding to the short notification message, that is, open an application corresponding to the short notification message.

In addition, in response to that the user does not gaze at the third specified area in the third preset duration, or duration in which the user gazes at the third specified area does not exceed a fourth preset gaze duration threshold, the electronic device may consider that the user is not interested in the short notification message, that is, does not intend to perform an interactive operation on the short notification message. The electronic device may cancel displaying of the short notification message in the third specified area after duration in which the long notification message is displayed in the third specified area in the display interface exceeds fourth preset duration.

In some embodiments, the user may implement interaction with an application by looking at a specified location in a display interface displayed by the application running in the electronic device. The specified location may be one or more areas in the display diagram shown in FIG. 9A and FIG. 9B, or may be another area determined according to an actual requirement. Optionally, the specified location may be an invisible transparent area, or may be a visible area. The visible area may be suspended on a display interface displayed by an application, so that the user can accurately gaze at the specified location.

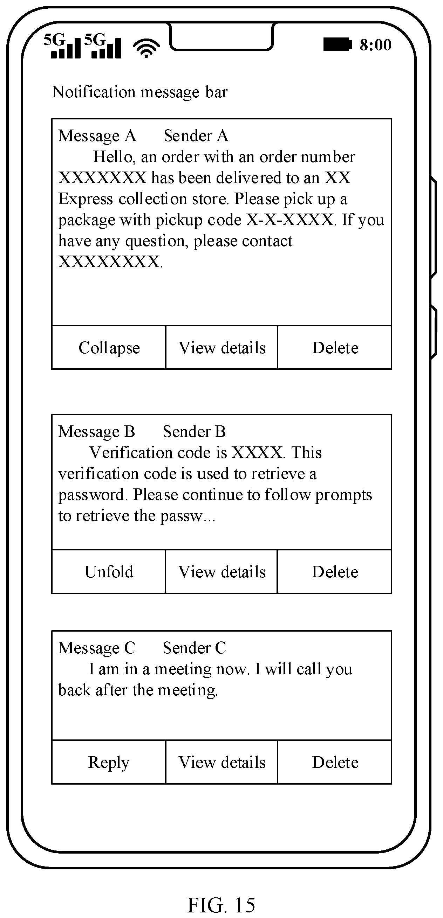

Specifically, the specified location may include an area in which text content of a notification message is located. As shown in FIG. 14A, the electronic device may detect that the coordinates of the gaze point of the user are in the area displayed by the message A. In addition, the specified location may further include a display area of some controls corresponding to a notification message. For example, as shown in FIG. 15, a specified location corresponding to a message A includes a Collapse control, a View details control, and a Delete control. In response to that the user gazes at the Collapse control, the electronic device may display the message A in a folded manner. In response to that the user gazes at the View details control, the electronic device may open a display interface of an application corresponding to the message A. In response to that the user gazes at the Delete control, the electronic device may delete the message A from a display interface of a notification message bar. A specified location corresponding to a message B includes an Unfold control, a View details control, and a Delete control. In response to that the user gazes at the Unfold control, the electronic device may display the message B in an unfolded manner. A specified location corresponding to a message C includes a Reply control, a View details control, and a Delete control. In response to that the user gazes at the Reply control, the electronic device may display a text input box for replying to the message. A type and a function of a gaze control at the specified location may be set based on an actual message. This is not limited herein.

For example, when a short video application runs, the electronic device displays a short video display interface, and the short video display interface is playing a short video A. The electronic device detects that the user is gazing at a first target area in a lower part of the short video display interface, so that the short video A played in the short video display interface may be replaced with a short video B. Then, if detecting that the user is gazing at a second target area in the lower part of the short video display interface, the electronic device may replace the short video B played in the short video display interface with a short video C. After the short video A played in the short video display interface is replaced with the short video B, if detecting that the user is gazing at the second target area in an upper part of the short video display interface, the electronic device may replace the short video B played in the short video display interface with the short video A. A recommendation sequence of the short video A is greater than a recommendation sequence of the short video B, and a recommendation sequence of the short video B is greater than a recommendation sequence of the short video C. In this way, when detecting that the user gazes at the first target area or the second target area in the short video display interface, the electronic device may implement that short videos are sequentially played in a preset recommendation sequence.

Optionally, the electronic device detects that the user is gazing at the first target area in the lower part of the short video display interface, and gaze duration exceeds 3 s, so that the short video A played in the short video display interface may be replaced with the short video B.

In addition, eye movement interaction may further be applied to an image shooting scenario. In some examples, when displaying an image shooting interface of a video or a picture, the electronic device may determine, in response to gazing of the user, a gaze location at which the user gazes at the display. Then, the electronic device may focus a picture corresponding to the gaze location.

Optionally, when displaying an image shooting interface of a video or a picture, the electronic device may determine, in response to continuous gazing of the user, a gaze location that changes with eye movement of the user on the display. Then, the electronic device may continuously perform focusing based on a picture corresponding to the gaze location, to implement focus tracking.

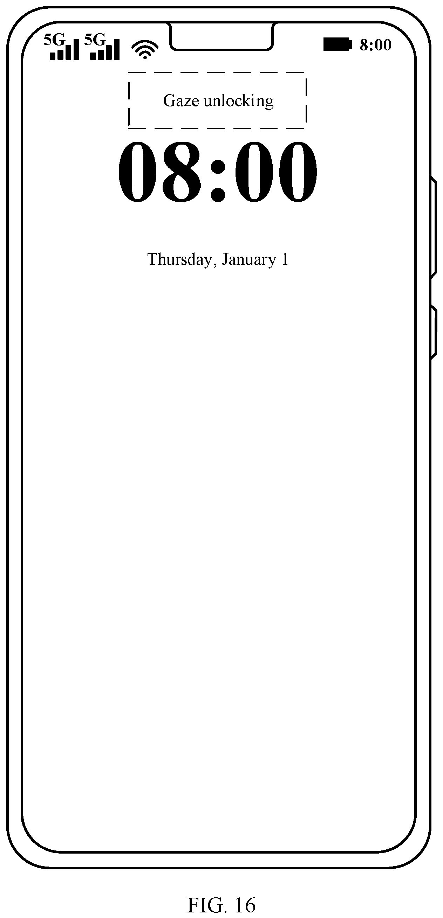

In some embodiments, when displaying a lock screen interface, the electronic device may recognize eye movement of the user, and perform eye movement unlocking based on an eye movement recognition result. When detecting that the user gazes at a gaze unlocking area in a lock screen interface shown in FIG. 16, the electronic device may recognize eye movement of the user, to implement gaze unlocking.

Optionally, when displaying a lock screen interface, the electronic device may recognize eye movement and a face of the user, and perform unlocking based on eye movement and face recognition results, to improve security. For example, when detecting that the user gazes at a gaze unlocking area in a lock screen interface shown in FIG. 16, the electronic device may recognize eye movement and a face of the user, and determine, based on an eye movement recognition result and a face recognition result, whether unlocking can be performed.

For example, when detecting that the user gazes at the gaze unlocking area in the lock screen interface shown in FIG. 16, the electronic device may collect image data. Then, the electronic device determines eye movement data of the user based on the image data, where the eye movement data may include an eye movement feature corresponding to the user. The electronic device may recognize an identity of the user based on the eye movement feature. The electronic device may further determine face information of the user based on the image data, where the face information may include a face feature corresponding to the user. The electronic device may recognize an identity of the user based on the face feature. When the identity of the user verified by the electronic device based on the eye movement feature is the same as the identity of the user verified based on the face feature, the electronic device may perform lock screen unlocking and display an unlocked operation interface.

In the message processing method according to this application, an eye image of the user may be collected and recognized, to determine a gaze point and gaze duration of the user on the display. Then, the electronic device may determine, based on the gaze point and the gaze duration of the user, whether the user wants to perform an operation on a notification message on a display interface, to implement an interactive operation that is on the notification message and that is based on eye movement of the user.

In this way, the user can perform an interactive operation on the electronic device through eye movement, thereby implementing a more convenient contactless human-computer interaction process.

In the message processing method according to this application, when the intelligent awareness control module creates a camera path according to an eye movement recognition procedure invoking request, current ambient light data may be obtained. After that, the intelligent awareness control module may determine current ambient light luminance based on the ambient light data, and then determine, based on the current ambient light luminance, a camera that needs to be turned on. In this way, a turned-on camera is determined based on an actual environment, to ensure accuracy of a captured image, and then improve accuracy of eye movement recognition.

In the message processing method according to this application, when the intelligent awareness control module creates a camera path according to an eye movement calibration procedure invoking request, paths in which a plurality of cameras are located may be simultaneously established, to ensure accuracy of eye movement calibration.

In the message processing method according to this application, in the foregoing eye movement calibration process, after the intelligent awareness TA reads a TOF RAW image and an RGB image from the secure memory based on a first FD and a second FD, the intelligent awareness TA may perform eye movement calibration processing based on the TOF RAW image and the RGB image. In the foregoing eye movement recognition process, after the intelligent awareness TA reads a TOF RAW image and/or an RGB image from the secure memory based on a first FD and/or a second FD, the intelligent awareness TA may perform eye movement recognition processing based on the TOF RAW image and/or the RGB image. Security of image data in the eye movement calibration process or the eye movement recognition process is further improved, thereby ensuring accuracy of eye movement calibration and eye movement interaction.

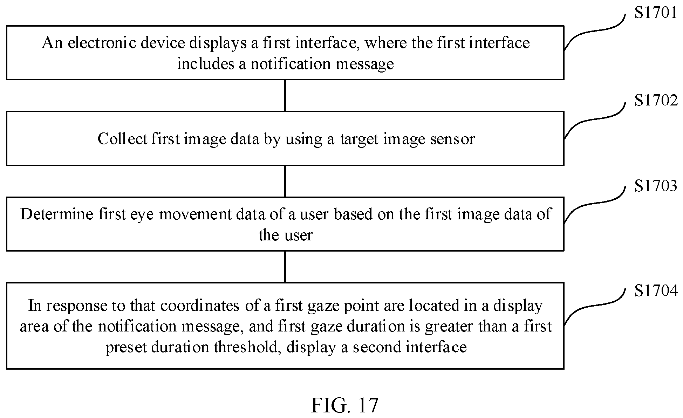

For example, FIG. 17 is a schematic flowchart of video music processing according to an embodiment of this application. As shown in FIG. 10A and FIG. 10B, the method includes the following steps.

S1701: An electronic device displays a first interface, where the first interface includes a notification message.

In some embodiments, the electronic device may display the first interface by using the following process. Specifically, the electronic device displays a third interface, and the third interface includes a long notification message in a folded state. A quantity of characters of the long notification message is greater than a preset character threshold. The electronic device may obtain a quantity of characters of a notification message, and determine that a notification message whose quantity of characters is greater than the preset character threshold is a long notification message, and then display the long notification message in a folded state on the third interface, as shown in FIG. 14A, to ensure brief displaying of the notification message in a pull-down notification message bar.

Then, the electronic device collects second image data by using a target image sensor, where the second image data includes an eye image of a user. After that, the electronic device determines second eye movement data of the user based on the second image data of the user, where the second eye movement data includes coordinates of a second gaze point and second gaze duration. In response to that the coordinates of the second gaze point are located in a display area of the long notification message, and the second gaze duration is greater than a second preset duration threshold, the electronic device displays the first interface, where the first interface includes a long notification message in an unfolded state, as shown in FIG. 14B.

In some embodiments, after displaying the first interface, the electronic device may further collect third image data by using the target image sensor, where the third image data includes an eye image of the user. Then, the electronic device determines third eye movement data of the user based on the third image data of the user. The third eye movement data includes coordinates of a third gaze point and third gaze duration. In response to that the coordinates of the third gaze point are located outside the display area of the long notification message on the first interface, the electronic device displays a fourth interface, where the fourth interface includes a long notification message in a folded state. As shown in FIG. 14A, the message A is displayed in the folded state again. Alternatively, the fourth interface does not include a long notification message. As shown in FIG. 14C, the message A is no longer displayed on the display interface.

S1702: Collect first image data by using the target image sensor, where the first image data includes an eye image of the user.

The electronic device obtains current ambient light data, and determines current ambient light luminance based on the current ambient light data, and then determines, based on the current ambient light luminance, a target image sensor that needs to be turned on. For example, the electronic device may determine, based on a control relationship between ambient light luminance and a camera, the target camera that needs to be turned on under the current ambient light luminance.

The electronic device includes a time of flight TOF image sensor and an RGB image sensor. When collecting the first image data by using the target image sensor, the electronic device Performs collection by using the following process. Specifically, the electronic device first obtains the current ambient light luminance, and controls, in response to that the current ambient light luminance is greater than a first preset luminance threshold, the RGB image sensor to collect first RGB image data; or controls, in response to that the current ambient light luminance is less than or equal to a first preset luminance threshold, the TOF image sensor to collect first TOF image data.

For example, if the current ambient light luminance is greater than 100 lux (lux), the electronic device controls an RGB camera to be turned on. If the current ambient light luminance is less than or equal to 100 lux, the electronic device controls a TOF camera to be turned on. In this case, when learning that the current ambient light luminance is 50, the electronic device may control the TOF camera to be turned on.

In some embodiments, after controlling, in response to that the current ambient light luminance is greater than the first preset luminance threshold, the RGB image sensor to collect the first RGB image data, the electronic device may further determine, based on the first RGB image data, whether eyes of the user are covered by a reflective object. If it is determined, based on the first RGB image data, that the eyes of the user are not covered by the reflective object, the electronic device controls the RGB image sensor to be turned off, and controls the TOF image sensor to be turned on and then collect the first image data.

The electronic device may recognize feature information of the eyes on a face based on the first RGB image data. If the recognized feature information matches an image feature of wearing glasses, it may be considered that the user wears the glasses, and the glasses are the reflective object. In addition, if a face recognition unit recognizes that there is a preset quantity of reflective points on the face of the user except for a pupil area, it may be considered that there is the reflective object between the eyes of the user and the image sensor.

S1703: Determine first eye movement data of the user based on the first image data of the user, where the first eye movement data includes coordinates of a first gaze point and first gaze duration.

The electronic device may determine the eye movement data by using an eye movement recognition model. The electronic device includes an eye movement recognition unit, and the eye movement recognition unit includes the eye movement recognition model. In the eye movement recognition model, a face area rectangle box and a face key point array in a single picture, 5*10 or 9* 10 16-dimensional float type calibration feature vectors, a current resolution and a physical size (PPI) of a display of the electronic device, and a physical deviation of the calibration IR/RGB relative to an origin (which may be an upper left corner of the display) in the display interface of the display are input. Then, the eye movement recognition unit may output a gaze point location that is based on the origin in the display interface of the display for reference.

S1704: In response to that the coordinates of the first gaze point are located in a display area of the notification message, and the first gaze duration is greater than a first preset duration threshold, display a second interface, where the second interface is a display interface of an application corresponding to the notification message.

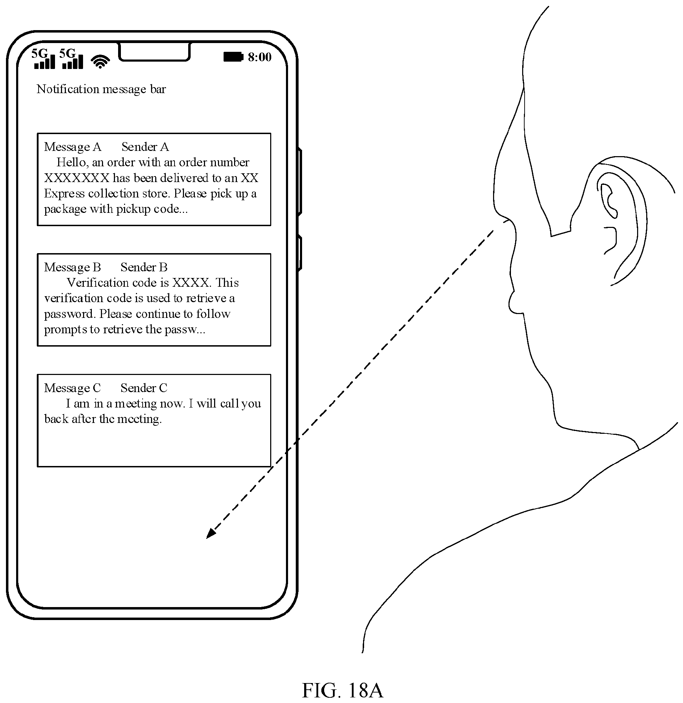

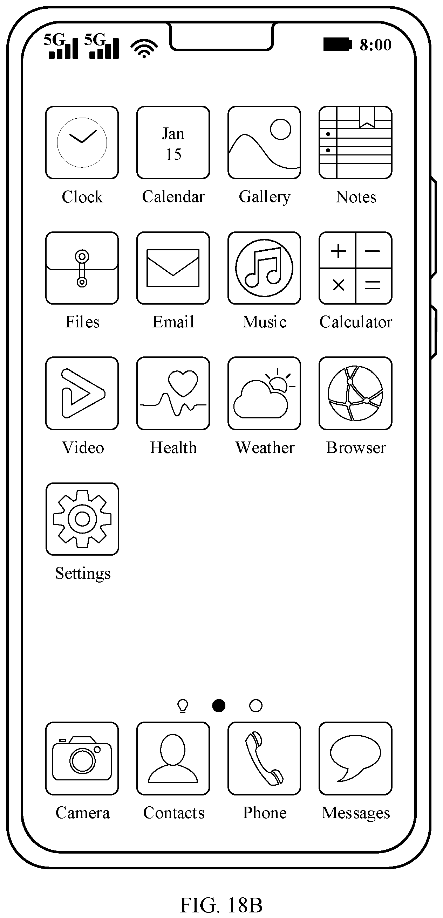

In some embodiments, in response to that the coordinates of the first gaze point are located outside a display area of the notification message, as shown in FIG. 18A, when the user gazes at a display area of any notification message, the electronic device displays a fifth interface shown in FIG. 18B after first preset duration. The fifth interface may be a page that does not include a notification message.

The electronic device includes a time of flight TOF image sensor and an RGB image sensor. When collecting the first image data by using the target image sensor, the electronic device may control the RGB image sensor to collect first RGB image data and the TOF image sensor to collect first TOF image data. If it is determined, based on the first RGB image data and/or the first TOF image data, that eyes of the user are covered by a reflective object, current ambient light luminance is obtained. In response to that the current ambient light luminance is greater than a first preset luminance threshold, the electronic device controls the TOF image sensor to be turned off.

In some embodiments, the electronic device may display a sixth interface, and the sixth interface includes at least one calibration location. Then, the electronic device collects fourth image data by using the target image sensor, determines coordinates of a fourth gaze point of the user based on the fourth image data, and determines an eye movement calibration result based on an error between coordinates of the calibration location and the coordinates of the fourth gaze point.

The electronic device may display the sixth interface in response to an operation of the user. For example, as shown in FIG. 6A, the interface displayed by the electronic device includes the plurality of application icons. In response to the tap operation performed by the user on the Settings application icon, the electronic device displays the setting interface shown in FIG. 6B, and the setting options displayed in the setting display interface include the eye movement interaction. The operation bar corresponding to the eye movement interaction in the setting interface may display the enable status of the eye movement interaction function. As shown in FIG. 6B, turn-off is displayed in the operation bar corresponding to the eye movement interaction, which indicates that the electronic device does not enable the eye movement interaction function. After detecting the tap operation performed by the user on the eye movement interaction setting option, the electronic device displays the eye movement interaction setting interface shown in FIG. 6C. The eye movement interaction setting interface includes the on/off button for enabling the eye movement interaction function. The on/off button shown in FIG. 6C indicates that the eye movement interaction function is not enabled. After detecting the tap operation performed by the user on the on/off button shown in FIG. 6C, the electronic device may display the sixth interface.

Then, the electronic device collects the fourth image data by using the target image sensor, determines the coordinates of the fourth gaze point of the user based on the fourth image data, and determines the eye movement calibration result based on the error between the coordinates of the calibration location and the coordinates of the fourth gaze point. For example, the electronic device may obtain a calibration location at which the user looks at the display and that has been determined in a preset time period, and coordinates of a fourth gaze point that are of an eye movement interaction object and that are determined based on the fourth image data. Then, an electronic device driver determines an eye movement calibration result based on an error between coordinates of the calibration location and the coordinates of the fourth gaze point, to update stored eye movement calibration data.

In some embodiments, when collecting the fourth image data by using the target image sensor, the electronic device may control the TOF image sensor to collect second TOF image data, and control the RGB image sensor to collect second RGB image data. It is ensured that the second TOF image data and the second RGB image data are simultaneously used to perform eye movement calibration, thereby ensuring accuracy of eye movement calibration, and subsequently implementing more accurate eye movement recognition.

Optionally, hard synchronization may be implemented between the TOF camera and the RGB camera, to ensure accuracy of eye movement calibration. Specifically, the TOF camera and the RGB camera may be connected through a connection cable. The connection cable is configured to transmit a synchronization signal, so that the TOF image sensor and the RGB image sensor synchronously collect image data based on the synchronization signal. In addition, the electronic device may further set the RGB camera as a master (master) camera module, and set the TOF camera as a slave (slave) camera module. In this way, the RGB camera outputs a part field synchronization signal (xvs) to the TOF camera.

In some embodiments, the electronic device includes a hardware abstraction layer HAL and a hardware layer. The HAL includes an intelligent awareness control module and an intelligent awareness TA. The hardware layer includes a secure memory, and the secure memory is used to store image data collected by the target image sensor. The intelligent awareness TA runs in a trusted execution environment.

When determining the first eye movement data of the user based on the first image data of the user, the electronic device may obtain a file descriptor by controlling the intelligent awareness control module, where the file descriptor is used to describe a storage location of the first image data in the electronic device. Then, the intelligent awareness TA is controlled to obtain the first image data from the secure memory based on the file descriptor. The intelligent awareness TA encrypts the first image data, and sends encrypted first image data to the intelligent awareness control module. The intelligent awareness control module decrypts the encrypted first image data, and determines the first eye movement data based on the first image data. The intelligent awareness TA may further synchronously send a key to the intelligent awareness control module, so that the intelligent awareness control module can decrypt encrypted TOF RAW image and encrypted RGB image based on the key.

Optionally, after obtaining the first image data from the secure memory based on the file descriptor, the intelligent awareness TA may further determine the first eye movement data based on the first image data, and send the first eye movement data to the intelligent awareness control module.

In some embodiments, the electronic device further includes a kernel layer. The HAL further includes a Camera hardware abstraction layer HAL. The Camera HAL includes a sensor node. The kernel layer further includes a camera driver. The hardware layer further includes at least one image sensor and a corresponding register. The at least one image sensor is disposed in one or more cameras. When collecting the first image data by using the target image sensor, the electronic device may control the sensor node to obtain an identifier and a configuration parameter of the to-be-controlled target image sensor. The sensor node sends the identifier and the configuration parameter of the target image sensor to the camera driver. The camera driver configures configuration data of the target image sensor in a register of the target image sensor based on the identifier of the target image sensor. The camera driver sends a data configuration completion message to the sensor node. The sensor node sends a first start command to the camera driver based on the data configuration completion message. The camera driver sends a second start command to the target image sensor. The target image sensor obtains the configuration parameter of the target image sensor from the register according to the second start command, and collects the image data based on the configuration parameter.

In some embodiments, the electronic device further includes an application layer and a framework layer. The application layer includes a system user interface UI, and the framework layer includes an intelligent awareness service.

After displaying a first interface, the electronic device may control the system UI to send an intelligent awareness registration request to the intelligent awareness service, where the intelligent awareness registration request is used to start an eye movement recognition procedure or an eye movement calibration procedure. The intelligent awareness service sends an intelligent awareness procedure invoking request to the intelligent awareness control module based on the intelligent awareness registration request. The intelligent awareness procedure invoking request includes the identifier and the configuration parameter of the target image sensor. The intelligent awareness control module creates a path of the target image sensor based on the identifier and the configuration parameter of the target image sensor.

In some embodiments, the framework layer further includes a camera service. The electronic device may create the path of the target image sensor by using the following process. Specifically, the camera service receives a request that is for creating the path of the target image sensor and that is sent by the intelligent awareness control module, where the request for creating the path includes the identifier and the configuration parameter of the target image sensor. The camera service sends the identifier and the configuration parameter of the target image sensor to the Camera HAL. The Camera HAL creates the path of the target image sensor based on the identifier of the target image sensor. The Camera HAL returns, to the camera service, a result that the path of the target image sensor is successfully created. The camera service returns a path creation result of the target image sensor to the intelligent awareness control module based on the received result that the path of the target image sensor is successfully created.

In some embodiments, when controlling the intelligent awareness control module to obtain the file descriptor, the electronic device may control the intelligent awareness control module to send a data request to the camera service, where the data request is used to obtain the file descriptor. The camera service invokes the Camera HAL to obtain the file descriptor based on the data request. The camera service sends the file descriptor to the intelligent awareness control module.

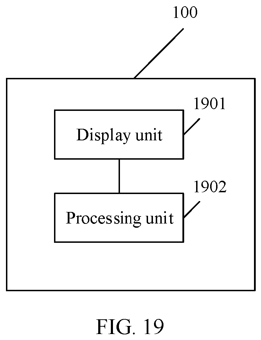

With reference to FIG. 5 to FIG. 18A and FIG. 18B, the foregoing describes in detail the message processing method according to this embodiment of this application. The following describes in detail an electronic device according to this embodiment of this application with reference to FIG. 19.

In a possible design, FIG. 19 is a schematic diagram of a structure of the electronic device according to an embodiment of this application. As shown in FIG. 19, an electronic device 100 may include a display unit 1901 and a processing unit 1902. The electronic device 100 may be configured to implement functions of the electronic device in the foregoing method embodiments.

Optionally, the display unit 1901 is configured to: support the electronic device 100 in displaying interface content, and/or support the electronic device 100 in executing S920 in FIG. 9B and S1701 and S1704 in FIG. 17.

Optionally, the processing unit 1902 is configured to support the electronic device 100 in executing S901 to S919 in FIG. 9A and FIG. 9B, S1301 to S1319 in FIG. 13A and FIG. 13B, and S1703 in FIG. 17.

Optionally, the electronic device 100 shown in FIG. 19 may further include a storage unit (not shown in FIG. 19), and the storage unit stores a program or instructions. When the processing unit 1902 executes the program or the instructions, the electronic device 100 shown in FIG. 19 may execute the message processing method in the foregoing method embodiments.

For technical effect of the electronic device 100 shown in FIG. 19, refer to the technical effect of the message processing method in the foregoing method embodiments. Details are not described herein again.

In addition to being implemented in a form of the electronic device 100, the technical solution provided in this application may also be implemented by a functional unit or a chip in the electronic device, or an apparatus used in a matching manner with the electronic device.

An embodiment of this application further provides a readable storage medium. The readable storage medium includes computer instructions. When the computer instructions are run on the foregoing electronic device, the electronic device is enabled to perform functions or steps in the foregoing method embodiments.

An embodiment of this application further provides a computer program product, including a computer program. When the computer program runs on an electronic device, the electronic device is enabled to perform functions or steps in the foregoing method embodiments.

Based on the foregoing descriptions of the implementations, a person skilled in the art may clearly understand that for a purpose of convenient and brief descriptions, division of the foregoing functional modules is merely used as an example for description. During actual application, the foregoing functions can be allocated to different functional modules for implementation according to a requirement, that is, an inner structure of an apparatus is divided into different functional modules, to implement all or some of the functions described above.

In several embodiments provided in this application, it should be understood that the disclosed apparatus and method may be implemented in other manners. For example, the foregoing described apparatus embodiment is merely an example. For example, division of the modules or units is merely logical function division and may be other division during actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between apparatuses or units may be implemented in electronic, mechanical, or another form.

The units described as separate parts may or may not be physically separate, and parts displayed as units may be one or more physical units, that is, may be located in one place, or may be distributed in a plurality of different places. Some or all of the units may be selected according to actual requirements to achieve the objectives of the solutions of embodiments.

In addition, functional units in embodiments of this application may be integrated into one processing unit, each of the units may exist alone physically, or two or more units may be integrated into one unit. The foregoing integrated unit may be implemented in a form of hardware, or may be implemented in a form of software functional unit.

When the integrated unit is implemented in the form of software functional unit and sold or used as an independent product, the integrated unit may be stored in a readable storage medium. Based on such an understanding, the technical solutions of embodiments of this application essentially, or the part contributing to the current technology, or all or some of the technical solutions may be implemented in a form of software product. The software product is stored in a storage medium and includes several instructions for instructing a device (which may be a single-chip microcomputer, a chip, or the like) or a processor (processor) to perform all or some of steps of methods in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing content is merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A message processing method, applied to an electronic device which comprises a time of flight TOF image sensor and an RGB image sensor, wherein the method comprises:
displaying (S1701) a first interface, wherein the first interface comprises a notification message;
collecting (S1702) first image data by using a target image sensor, wherein the first image data comprises an eye image of a user;
determining (S1703) first eye movement data of the user based on the first image data of the user, wherein the first eye movement data comprises coordinates of a first gaze point and first gaze duration; and
in response to that the coordinates of the first gaze point are located in a display area of the notification message, and the first gaze duration is greater than a first preset duration threshold, displaying (S1704)
a second interface, wherein the second interface is a display interface of an application corresponding to the notification message;
wherein the collecting first image data by using a target image sensor comprises:
obtaining current ambient light luminance; and is **characterized in that** in response to that the current ambient light luminance is greater than a first preset luminance threshold, controlling the RGB image sensor to collect first RGB image data; or in response to that the current ambient light luminance is less than or equal to a first preset luminance threshold, controlling the TOF image sensor to collect first TOF image data.

2. The method according to claim 1, wherein the displaying a first interface comprises:
displaying a third interface, wherein the third interface comprises a long notification message in a folded state, and a quantity of characters of the long notification message is greater than a preset character threshold;
collecting second image data by using the target image sensor, wherein the second image data comprises an eye image of the user;
determining second eye movement data of the user based on the second image data of the user, wherein the second eye movement data comprises coordinates of a second gaze point and second gaze duration; and
in response to that the coordinates of the second gaze point are located in a display area of the long notification message, and the second gaze duration is greater than a second preset duration threshold, displaying the first interface, wherein the first interface comprises the long notification message in an unfolded state.

3. The method according to claim 2, wherein after the displaying a first interface, the method further comprises:
collecting third image data by using the target image sensor, wherein the third image data comprises an eye image of the user;
determining third eye movement data of the user based on the third image data of the user, wherein the third eye movement data comprises coordinates of a third gaze point and third gaze duration; and
in response to that the coordinates of the third gaze point are located outside the display area of the long notification message in the first interface, displaying a fourth interface, wherein the fourth interface comprises the long notification message in the folded state, or the fourth interface does not comprise the long notification message.

4. The method according to claim 1, wherein the method further comprises:
in response to that the coordinates of the first gaze point are located outside a display area of the notification message, displaying a fifth interface after first preset duration, wherein the fifth interface does not comprise the notification message.

5. The method according to claim 1, wherein after the controlling, in response to that the current ambient light luminance is greater than a first preset luminance threshold, the RGB image sensor to collect first RGB image data, the method further comprises:
if it is determined, based on the first RGB image data, that eyes of the user are not covered by a reflective object, controlling the RGB image sensor to be turned off, and controlling the TOF image sensor to be turned on and then collect the first image data.

6. The method according to any one of claims 1 to 5, wherein the method further comprises:
displaying a sixth interface, wherein the sixth interface comprises at least one calibration location;
collecting fourth image data by using the target image sensor;
determining coordinates of a fourth gaze point of the user based on the fourth image data; and
determining an eye movement calibration result based on an error between coordinates of the calibration location and the coordinates of the fourth gaze point.

7. The method according to claim 6, wherein the collecting fourth image data by using the target image sensor comprises:
controlling the TOF image sensor to collect second TOF image data, and controlling the RGB image sensor to collect second RGB image data.

8. The method according to claim 7, wherein the TOF image sensor and the RGB image sensor are connected through a connection cable; and the connection cable is configured to transmit a synchronization signal, so that the TOF image sensor and the RGB image sensor synchronously collect image data based on the synchronization signal.

9. The method according to any one of claims 1 to 8, wherein the electronic device comprises a hardware abstraction layer HAL and a hardware layer;
the HAL comprises an intelligent awareness control module and an intelligent awareness TA, the hardware layer comprises a secure memory, and the secure memory is used to store image data collected by the target image sensor; and
the intelligent awareness TA runs in a trusted execution environment; and
the determining first eye movement data of the user based on the first image data of the user comprises:
obtaining, by the intelligent awareness control module, a file descriptor, wherein the file descriptor is used to describe a storage location of the first image data in the electronic device;
obtaining, by the intelligent awareness TA, the first image data from the secure memory based on the file descriptor;
encrypting, by the intelligent awareness TA, the first image data, and sending encrypted first image data to the intelligent awareness control module; and
decrypting, by the intelligent awareness control module, the encrypted first image data, and determining the first eye movement data based on the first image data; or determining, by the intelligent awareness TA, the first eye movement data based on the first image data, and sending the first eye movement data to the intelligent awareness control module.

10. The method according to claim 9, wherein the electronic device further comprises a kernel layer; and
the HAL further comprises a Camera hardware abstraction layer HAL, the Camera HAL comprises a sensor node, the kernel layer further comprises a camera driver, the hardware layer further comprises at least one image sensor and a corresponding register, and the at least one image sensor is disposed in one or more cameras; and
the collecting first image data by using a target image sensor comprises:
obtaining, by the sensor node, an identifier and a configuration parameter of the to-be-controlled target image sensor;
sending, by the sensor node, the identifier and the configuration parameter of the target image sensor to the camera driver;
configuring, by the camera driver, configuration data of the target image sensor in a register of the target image sensor based on the identifier of the target image sensor;
sending, by the camera driver, a data configuration completion message to the sensor node;
sending, by the sensor node, a first start command to the camera driver based on the data configuration completion message;
sending, by the camera driver, a second start command to the target image sensor; and
obtaining, by the target image sensor, the configuration parameter of the target image sensor from the register according to the second start command, and collecting the image data based on the configuration parameter.

11. The method according to claim 10, wherein the electronic device further comprises an application layer and a framework layer; and
the application layer comprises a system user interface UI, and the framework layer comprises an intelligent awareness service; and
after the displaying a first interface, the method further comprises:
sending, by the system UI, an intelligent awareness registration request to the intelligent awareness service, wherein the intelligent awareness registration request is used to start an eye movement recognition procedure or an eye movement calibration procedure;
sending, by the intelligent awareness service, an intelligent awareness procedure invoking request to the intelligent awareness control module based on the intelligent awareness registration request, wherein the intelligent awareness procedure invoking request comprises the identifier and the configuration parameter of the target image sensor; and
creating, by the intelligent awareness control module, a path of the target image sensor based on the identifier and the configuration parameter of the target image sensor.

12. The method according to claim 11, wherein the framework layer further comprises a camera service; and
the creating a path of the target image sensor comprises:
receiving, by the camera service, a request that is for creating the path of the target image sensor and that is sent by the intelligent awareness control module, wherein the request for creating the path comprises the identifier and the configuration parameter of the target image sensor;
sending, by the camera service, the identifier and the configuration parameter of the target image sensor to the Camera HAL;
creating, by the Camera HAL, the path of the target image sensor based on the identifier of the target image sensor;
returning, by the Camera HAL to the camera service, a result that the path of the target image sensor is successfully created; and
returning, by the camera service, a path creation result of the target image sensor to the intelligent awareness control module based on the received result that the path of the target image sensor is successfully created.

13. The method according to claim 12, wherein the obtaining, by the intelligent awareness control module, a file descriptor comprises:
sending, by the intelligent awareness control module, a data request to the camera service, wherein the data request is used to obtain the file descriptor;
invoking, by the camera service, the Camera HAL to obtain the file descriptor based on the data request; and
sending, by the camera service, the file descriptor to the intelligent awareness control module.

14. An electronic device (100), wherein the electronic device comprises a display (394), an image sensor (393), a memory (321), and one or more processors (310); the display, the image sensor, and the memory are coupled to the processor; the display is configured to display an image generated by the processor, the image sensor is configured to collect image data, the memory is configured to store computer program code, and the computer program code comprises computer instructions; and when the processor executes the computer instructions, the electronic device is enabled to perform the method according to any one of claims 1 to 13.

15. A readable storage medium, comprising computer instructions, wherein when the computer instructions are run on an electronic device, the electronic device is enabled to perform the method according to any one of claims 1 to 13.

## Patentansprüche

1. Verfahren zur Nachrichtenverarbeitung, angewendet auf eine elektronische Vorrichtung, die einen Time-of-Flight- (TOF-) Bildsensor und einen RGB-Bildsensor umfasst, wobei das Verfahren umfasst:
Anzeigen (S1701) einer ersten Schnittstelle, wobei die erste Schnittstelle eine Benachrichtigungsnachricht umfasst;
Erfassen (S1702) von ersten Bilddaten unter Verwendung eines Zielbildsensors, wobei die ersten Bilddaten ein Augenbild eines Benutzers umfassen;
Bestimmen (S1703) von ersten Augenbewegungsdaten des Benutzers basierend auf den ersten Bilddaten des Benutzers, wobei die ersten Augenbewegungsdaten Koordinaten eines ersten Blickpunkts und eine erste Blickdauer umfassen; und
als Reaktion darauf, dass die Koordinaten des ersten Blickpunkts in einem Anzeigebereich der Benachrichtigungsnachricht liegen und die erste Blickdauer größer als ein erster voreingestellter Dauerschwellenwert ist, Anzeigen (S1704) einer zweiten Schnittstelle, wobei die zweite Schnittstelle eine Anzeigeschnittstelle einer Anwendung ist, die der Benachrichtigungsnachricht entspricht;
wobei das Erfassen erster Bilddaten unter Verwendung eines Zielbildsensors umfasst:
Ermitteln einer aktuellen Umgebungslichthelligkeit; und **dadurch gekennzeichnet, dass**
als Reaktion darauf, dass die aktuelle Umgebungslichthelligkeit größer als ein erster voreingestellter Helligkeitsschwellenwert ist, Steuern des RGB-Bildsensors zum Erfassen erster RGB-Bilddaten; oder in
Reaktion darauf, dass die aktuelle Umgebungslichthelligkeit kleiner oder gleich einem ersten voreingestellten Helligkeitsschwellenwert ist, Steuern des TOF-Bildsensors zum Erfassen erster TOF-Bilddaten.

2. Verfahren nach Anspruch 1, wobei das Anzeigen einer ersten Schnittstelle umfasst:
Anzeigen einer dritten Schnittstelle, wobei die dritte Schnittstelle eine lange Benachrichtigungsnachricht in einem eingeklappten Zustand umfasst und eine Anzahl von Zeichen der langen Benachrichtigungsnachricht größer als ein voreingestellter Zeichenschwellenwert ist;
Erfassen von zweiten Bilddaten unter Verwendung des Zielbildsensors, wobei die zweiten Bilddaten ein Augenbild des Benutzers umfassen;
Bestimmen von zweiten Augenbewegungsdaten des Benutzers basierend auf den zweiten Bilddaten des Benutzers, wobei die zweiten Augenbewegungsdaten Koordinaten eines zweiten Blickpunkts und eine zweite Blickdauer umfassen; und
als Reaktion darauf, dass die Koordinaten des zweiten Blickpunkts in einem Anzeigebereich der langen Benachrichtigungsnachricht liegen und die zweite Blickdauer größer als ein zweiter voreingestellter Dauerschwellenwert ist, Anzeigen der ersten Schnittstelle, wobei die erste Schnittstelle die lange Benachrichtigungsnachricht in einem ausgeklappten Zustand umfasst.

3. Verfahren nach Anspruch 2, wobei das Verfahren nach dem Anzeigen einer ersten Schnittstelle ferner umfasst:
Erfassung dritter Bilddaten unter Verwendung des Zielbildsensors, wobei die dritten Bilddaten ein Augenbild des Benutzers umfassen;
Bestimmung dritter Augenbewegungsdaten des Benutzers basierend auf den dritten Bilddaten des Benutzers, wobei die dritten Augenbewegungsdaten Koordinaten eines dritten Blickpunkts und eine dritte Blickdauer umfassen; und
als Reaktion darauf, dass sich die Koordinaten des dritten Blickpunkts außerhalb des Anzeigebereichs der langen Benachrichtigungsnachricht in der ersten Schnittstelle befinden, Anzeigen einer vierten Schnittstelle, wobei die vierte Schnittstelle die lange Benachrichtigungsnachricht im eingeklappten Zustand umfasst oder die vierte Schnittstelle die lange Benachrichtigungsnachricht nicht umfasst.

4. Verfahren nach Anspruch 1, wobei das Verfahren ferner umfasst:
als Reaktion darauf, dass sich die Koordinaten des ersten Blickpunkts außerhalb eines Anzeigebereichs der Benachrichtigungsnachricht befinden, Anzeigen einer fünften Schnittstelle nach einer ersten voreingestellten Dauer, wobei die fünfte Schnittstelle die Benachrichtigungsnachricht nicht umfasst.

5. Verfahren nach Anspruch 1, wobei nach dem Steuern, als Reaktion darauf, dass die aktuelle Umgebungslichthelligkeit größer als ein erster voreingestellter Helligkeitsschwellenwert ist, der RGB-Bildsensor erste RGB-Bilddaten erfasst, wobei das Verfahren ferner umfasst:
falls basierend auf den ersten RGB-Bilddaten bestimmt wird, dass die Augen des Benutzers nicht von einem reflektierenden Objekt verdeckt sind, Steuern des Ausschaltens des RGB-Bildsensors und Steuern des Einschaltens des TOF-Bildsensors, um dann die ersten Bilddaten zu erfassen.

6. Verfahren nach einem der Ansprüche 1 bis 5, wobei das Verfahren ferner umfasst:
Anzeigen einer sechsten Schnittstelle, wobei die sechste Schnittstelle mindestens einen Kalibrierungsort umfasst;
Erfassung vierter Bilddaten unter Verwendung des Zielbildsensors;
Bestimmung von Koordinaten eines vierten Blickpunkts des Benutzers basierend auf den vierten Bilddaten; und
Bestimmung eines Augenbewegungskalibrierungsergebnisses basierend auf einem Fehler zwischen den Koordinaten des Kalibrierungsortes und den Koordinaten des vierten Blickpunkts.

7. Verfahren nach Anspruch 6, wobei die Erfassung vierter Bilddaten unter Verwendung des Zielbildsensors umfasst:
Steuern des TOF-Bildsensors zur Erfassung zweiter TOF-Bilddaten und Steuern des RGB-Bildsensors zur Erfassung zweiter RGB-Bilddaten.

8. Verfahren nach Anspruch 7, wobei der TOF-Bildsensor und der RGB-Bildsensor durch ein Verbindungskabel verbunden sind; und das Verbindungskabel dazu konfiguriert ist, ein Synchronisationssignal zu übertragen, sodass der TOF-Bildsensor und der RGB-Bildsensor basierend auf dem Synchronisationssignal synchron Bilddaten erfassen.

9. Verfahren nach einem der Ansprüche 1 bis 8, wobei die elektronische Vorrichtung eine Hardware-Abstraktionsschicht (HAL) und eine Hardwareschicht umfasst;
die HAL ein intelligentes Wahrnehmungssteuerungsmodul und eine intelligente Wahrnehmungs-TA umfasst, die Hardwareschicht einen sicheren Speicher umfasst und der sichere Speicher dazu verwendet wird, von dem Zielbildsensor erfasste Bilddaten zu speichern; und
die intelligente Wahrnehmungs-TA in einer vertrauenswürdigen Ausführungsumgebung (Trusted Execution Environment) ausgeführt wird; und
das Bestimmen der ersten Augenbewegungsdaten des Benutzers basierend auf den ersten Bilddaten des Benutzers Folgendes umfasst:
Erhalten eines Dateideskriptors durch das intelligente Wahrnehmungssteuerungsmodul, wobei der Dateideskriptor dazu verwendet wird, einen Speicherort der ersten Bilddaten in der elektronischen Vorrichtung zu beschreiben;
Erhalten der ersten Bilddaten aus dem sicheren Speicher durch die intelligente Wahrnehmungs-TA basierend auf dem Dateideskriptor;
Verschlüsseln der ersten Bilddaten durch die intelligente Wahrnehmungs-TA und Senden der verschlüsselten ersten Bilddaten an das intelligente Wahrnehmungssteuerungsmodul; und
Entschlüsseln der verschlüsselten ersten Bilddaten durch das intelligente Wahrnehmungssteuerungsmodul und Bestimmen der ersten Augenbewegungsdaten basierend auf den ersten Bilddaten; oder Bestimmen der ersten Augenbewegungsdaten durch die intelligente Wahrnehmungs-TA basierend auf den ersten Bilddaten und Senden der ersten Augenbewegungsdaten an das intelligente Wahrnehmungssteuerungsmodul.

10. Verfahren nach Anspruch 9, wobei die elektronische Vorrichtung ferner eine Kernelschicht umfasst; und
die HAL ferner eine Kamera-HAL umfasst, die Kamera-HAL einen Sensorknoten umfasst, die Kernelschicht ferner einen Kameratreiber umfasst, die Hardwareschicht ferner mindestens einen Bildsensor und ein entsprechendes Register umfasst und der mindestens eine Bildsensor in einer oder mehreren Kameras angeordnet ist; und
das Erfassen der ersten Bilddaten unter Verwendung eines Zielbildsensors Folgendes umfasst:
Erhalten einer Kennung und eines Konfigurationsparameters des zu steuernden Zielbildsensors durch den Sensorknoten;
Senden der Kennung und des Konfigurationsparameters des Zielbildsensors durch den Sensorknoten an den Kameratreiber;
Konfigurieren, durch den Kameratreiber, von Konfigurationsdaten des Zielbildsensors in einem Register des Zielbildsensors basierend auf der Kennung des Zielbildsensors;
Senden, durch den Kameratreiber, einer Datenkonfigurations-Abschlussnachricht an den Sensorknoten;
Senden, durch den Sensorknoten, eines ersten Startbefehls an den Kameratreiber basierend auf der Datenkonfigurations-Abschlussnachricht;
Senden, durch den Kameratreiber, eines zweiten Startbefehls an den Zielbildsensor; und
Erhalten, durch den Zielbildsensor, des Konfigurationsparameters des Zielbildsensors aus dem Register gemäß dem zweiten Startbefehl und Sammeln der Bilddaten basierend auf dem Konfigurationsparameter.

11. Das Verfahren nach Anspruch 10, wobei die elektronische Vorrichtung ferner eine Anwendungsschicht und eine Framework-Schicht umfasst; und
die Anwendungsschicht eine Systembenutzeroberfläche (UI) umfasst und die Framework-Schicht einen intelligenten Wahrnehmungsdienst umfasst; und
nach dem Anzeigen einer ersten Schnittstelle umfasst das Verfahren ferner:
Senden, durch die System-UI, einer intelligenten Wahrnehmungs-Registrierungsanforderung an den intelligenten Wahrnehmungsdienst, wobei die intelligente Wahrnehmungs-Registrierungsanforderung verwendet wird, um einen Augenbewegungs-Erkennungsvorgang oder einen Augenbewegungs-Kalibrierungsvorgang zu starten;
Senden, durch den intelligenten Wahrnehmungsdienst, einer Anforderung zum Aufrufen eines intelligenten Wahrnehmungsvorgangs an das intelligente Wahrnehmungssteuerungsmodul basierend auf der intelligenten Wahrnehmungs-Registrierungsanforderung, wobei die Anforderung zum Aufrufen eines intelligenten Wahrnehmungsvorgangs die Kennung und den Konfigurationsparameter des Zielbildsensors umfasst; und
Erstellen, durch das intelligente Wahrnehmungssteuerungsmodul, eines Pfads des Zielbildsensors basierend auf der Kennung und dem Konfigurationsparameter des Zielbildsensors.

12. Das Verfahren nach Anspruch 11, wobei die Framework-Schicht ferner einen Kameradienst umfasst; und
das Erstellen eines Pfads des Zielbildsensors umfasst:
Empfangen, durch den Kameradienst, einer Anforderung zum Erstellen des Pfads des Zielbildsensors, die vom intelligenten Wahrnehmungssteuerungsmodul gesendet wird, wobei die Anforderung zum Erstellen des Pfads die Kennung und den Konfigurationsparameter des Zielbildsensors umfasst;
Senden, durch den Kameradienst, der Kennung und des Konfigurationsparameters des Zielbildsensors an die Kamera-HAL;
Erstellen, durch die Kamera-HAL, des Pfads des Zielbildsensors basierend auf der Kennung des Zielbildsensors;
Rückgabe, durch die Kamera-HAL an den Kamera-Dienst, eines Ergebnisses, dass der Pfad des Zielbildsensors erfolgreich erstellt wurde; und
Rückgabe, durch den Kamera-Dienst, eines Pfaderstellungsergebnisses des Zielbildsensors an das intelligente Wahrnehmungssteuerungsmodul basierend auf dem empfangenen Ergebnis, dass der Pfad des Zielbildsensors erfolgreich erstellt wurde.

13. Verfahren nach Anspruch 12, wobei das Erhalten eines Dateideskriptors durch das intelligente Wahrnehmungssteuerungsmodul umfasst:
Senden einer Datenanforderung durch das intelligente Wahrnehmungssteuerungsmodul an den Kamera-Dienst, wobei die Datenanforderung dazu dient, den Dateideskriptor zu erhalten;
Aufrufen der Kamera-HAL durch den Kamera-Dienst, um den Dateideskriptor basierend auf der Datenanforderung zu erhalten; und
Senden des Dateideskriptors durch den Kamera-Dienst an das intelligente Wahrnehmungssteuerungsmodul.

14. Elektronisches Gerät (100), wobei das elektronische Gerät ein Display (394), einen Bildsensor (393), einen Speicher (321) und einen oder mehrere Prozessoren (310) umfasst; das Display, der Bildsensor und der Speicher sind mit dem Prozessor gekoppelt; das Display ist konfiguriert, um ein vom Prozessor erzeugtes Bild anzuzeigen, der Bildsensor ist konfiguriert, um Bilddaten zu erfassen, der Speicher ist konfiguriert, um Computerprogrammcode zu speichern, und der Computerprogrammcode umfasst Computeranweisungen; und wenn der Prozessor die Computeranweisungen ausführt, ist das elektronische Gerät dazu befähigt, das Verfahren nach einem der Ansprüche 1 bis 13 auszuführen.

15. Lesbares Speichermedium, umfassend Computeranweisungen, wobei, wenn die Computeranweisungen auf einem elektronischen Gerät ausgeführt werden, das elektronische Gerät dazu befähigt ist, das Verfahren nach einem der Ansprüche 1 bis 13 auszuführen.

## Revendications

1. Procédé de traitement de message, appliqué à un dispositif électronique qui comprend un capteur d'image TOF (temps de vol) et un capteur d'image RVB, dans lequel le procédé comprend :
l'affichage (S1701) d'une première interface, dans laquelle la première interface comprend un message de notification ;
la collecte (S1702) de premières données d'image en utilisant un capteur d'image cible, dans laquelle les premières données d'image comprennent une image de l'œil d'un utilisateur ;
la détermination (S1703) de premières données de mouvement oculaire de l'utilisateur sur la base des premières données d'image de l'utilisateur, dans laquelle les premières données de mouvement oculaire comprennent les coordonnées d'un premier point de regard et une première durée de regard ; et
en réponse au fait que les coordonnées du premier point de regard sont situées dans une zone d'affichage du message de notification, et que la première durée de regard est supérieure à un premier seuil de durée prédéfini, l'affichage (S1704) d'une deuxième interface, dans laquelle la deuxième interface est une interface d'affichage d'une application correspondant au message de notification ;
dans lequel la collecte des premières données d'image en utilisant un capteur d'image cible comprend :
l'obtention de la luminance ambiante actuelle ; et est **caractérisé en ce que**
en réponse au fait que la luminance ambiante actuelle est supérieure à un premier seuil de luminance prédéfini, la commande du capteur d'image RVB pour collecter des premières données d'image RVB ; ou en
réponse au fait que la luminance ambiante actuelle est inférieure ou égale à un premier seuil de luminance prédéfini, la commande du capteur d'image TOF pour collecter des premières données d'image TOF.

2. Procédé selon la revendication 1, dans lequel l'affichage d'une première interface comprend :
l'affichage d'une troisième interface, dans laquelle la troisième interface comprend un long message de notification dans un état replié, et une quantité de caractères du long message de notification est supérieure à un seuil de caractères prédéfini ;
la collecte de secondes données d'image en utilisant le capteur d'image cible, dans laquelle les secondes données d'image comprennent une image de l'œil de l'utilisateur ;
la détermination de secondes données de mouvement oculaire de l'utilisateur sur la base des secondes données d'image de l'utilisateur, dans laquelle les secondes données de mouvement oculaire comprennent les coordonnées d'un second point de regard et une seconde durée de regard ; et
en réponse au fait que les coordonnées du second point de regard sont situées dans une zone d'affichage du long message de notification, et que la seconde durée de regard est supérieure à un second seuil de durée prédéfini, l'affichage de la première interface, dans laquelle la première interface comprend le long message de notification dans un état déplié.

3. Procédé selon la revendication 2, dans lequel après l'affichage d'une première interface, le procédé comprend en outre :
collecte de troisièmes données d'image en utilisant le capteur d'image cible, dans lequel les troisièmes données d'image comprennent une image de l'œil de l'utilisateur ;
détermination de troisièmes données de mouvement oculaire de l'utilisateur sur la base des troisièmes données d'image de l'utilisateur, dans lequel les troisièmes données de mouvement oculaire comprennent les coordonnées d'un troisième point de regard et une troisième durée de regard ; et
en réponse au fait que les coordonnées du troisième point de regard sont situées en dehors de la zone d'affichage du long message de notification dans la première interface, affichage d'une quatrième interface, dans lequel la quatrième interface comprend le long message de notification à l'état plié, ou la quatrième interface ne comprend pas le long message de notification.

4. Procédé selon la revendication 1, dans lequel le procédé comprend en outre :
en réponse au fait que les coordonnées du premier point de regard sont situées en dehors d'une zone d'affichage du message de notification, affichage d'une cinquième interface après une première durée prédéfinie, dans lequel la cinquième interface ne comprend pas le message de notification.

5. Procédé selon la revendication 1, dans lequel après la commande, en réponse au fait que la luminance de la lumière ambiante actuelle est supérieure à un premier seuil de luminance prédéfini, le capteur d'image RVB pour collecter des premières données d'image RVB, le procédé comprend en outre :
s'il est déterminé, sur la base des premières données d'image RVB, que les yeux de l'utilisateur ne sont pas couverts par un objet réfléchissant, commande de l'extinction du capteur d'image RVB, et commande de l'allumage du capteur d'image TOF, puis collecte des premières données d'image.

6. Procédé selon l'une quelconque des revendications 1 à 5, dans lequel le procédé comprend en outre :
affichage d'une sixième interface, dans lequel la sixième interface comprend au moins un emplacement d'étalonnage ;
collecte de quatrièmes données d'image en utilisant le capteur d'image cible ;
détermination des coordonnées d'un quatrième point de regard de l'utilisateur sur la base des quatrièmes données d'image ; et
détermination d'un résultat d'étalonnage de mouvement oculaire sur la base d'une erreur entre les coordonnées de l'emplacement d'étalonnage et les coordonnées du quatrième point de regard.

7. Procédé selon la revendication 6, dans lequel la collecte de quatrièmes données d'image en utilisant le capteur d'image cible comprend :
commande du capteur d'image TOF pour collecter des deuxièmes données d'image TOF, et commande du capteur d'image RVB pour collecter des deuxièmes données d'image RVB.

8. Le procédé selon la revendication 7, dans lequel le capteur d'image TOF et le capteur d'image RGB sont connectés par un câble de connexion ; et le câble de connexion est configuré pour transmettre un signal de synchronisation, de sorte que le capteur d'image TOF et le capteur d'image RGB collectent de manière synchrone des données d'image sur la base du signal de synchronisation.

9. Le procédé selon l'une quelconque des revendications 1 à 8, dans lequel le dispositif électronique comprend une couche d'abstraction matérielle HAL et une couche matérielle ;
la HAL comprend un module de contrôle de perception intelligente et une TA de perception intelligente, la couche matérielle comprend une mémoire sécurisée, et la mémoire sécurisée est utilisée pour stocker les données d'image collectées par le capteur d'image cible ; et
la TA de perception intelligente s'exécute dans un environnement d'exécution sécurisé ; et
la détermination des premières données de mouvement oculaire de l'utilisateur sur la base des premières données d'image de l'utilisateur comprend :
l'obtention, par le module de contrôle de perception intelligente, d'un descripteur de fichier, dans lequel le descripteur de fichier est utilisé pour décrire un emplacement de stockage des premières données d'image dans le dispositif électronique ;
l'obtention, par la TA de perception intelligente, des premières données d'image à partir de la mémoire sécurisée sur la base du descripteur de fichier ;
le chiffrement, par la TA de perception intelligente, des premières données d'image, et l'envoi des premières données d'image chiffrées au module de contrôle de perception intelligente ; et
le déchiffrement, par le module de contrôle de perception intelligente, des premières données d'image chiffrées, et la détermination des premières données de mouvement oculaire sur la base des premières données d'image ; ou la détermination, par la TA de perception intelligente, des premières données de mouvement oculaire sur la base des premières données d'image, et l'envoi des premières données de mouvement oculaire au module de contrôle de perception intelligente.

10. Le procédé selon la revendication 9, dans lequel le dispositif électronique comprend en outre une couche noyau ; et
la HAL comprend en outre une HAL d'appareil photo, la HAL d'appareil photo comprend un nœud de capteur, la couche noyau comprend en outre un pilote de caméra, la couche matérielle comprend en outre au moins un capteur d'image et un registre correspondant, et l'au moins un capteur d'image est disposé dans une ou plusieurs caméras ; et
la collecte des premières données d'image en utilisant un capteur d'image cible comprend :
l'obtention, par le nœud de capteur, d'un identifiant et d'un paramètre de configuration du capteur d'image cible à contrôler ;
l'envoi, par le nœud de capteur, de l'identifiant et du paramètre de configuration du capteur d'image cible au pilote de caméra ;
configuration, par le pilote de caméra, des données de configuration du capteur d'image cible dans un registre du capteur d'image cible sur la base de l'identifiant du capteur d'image cible ;
envoi, par le pilote de caméra, d'un message de fin de configuration des données au nœud de capteur ;
envoi, par le nœud de capteur, d'une première commande de démarrage au pilote de caméra sur la base du message de fin de configuration des données ;
envoi, par le pilote de caméra, d'une seconde commande de démarrage au capteur d'image cible ; et
obtention, par le capteur d'image cible, du paramètre de configuration du capteur d'image cible à partir du registre en fonction de la seconde commande de démarrage, et collecte des données d'image sur la base du paramètre de configuration.

11. Procédé selon la revendication 10, dans lequel le dispositif électronique comprend en outre une couche d'application et une couche de cadre (framework) ; et
la couche d'application comprend une interface utilisateur (UI) système, et la couche de cadre comprend un service de perception intelligente ; et
après l'affichage d'une première interface, le procédé comprend en outre :
envoi, par l'UI système, d'une demande d'enregistrement de perception intelligente au service de perception intelligente, dans lequel la demande d'enregistrement de perception intelligente est utilisée pour lancer une procédure de reconnaissance des mouvements oculaires ou une procédure de calibration des mouvements oculaires ;
envoi, par le service de perception intelligente, d'une demande d'invocation de procédure de perception intelligente au module de contrôle de perception intelligente sur la base de la demande d'enregistrement de perception intelligente, dans lequel la demande d'invocation de procédure de perception intelligente comprend l'identifiant et le paramètre de configuration du capteur d'image cible ; et
création, par le module de contrôle de perception intelligente, d'un chemin du capteur d'image cible sur la base de l'identifiant et du paramètre de configuration du capteur d'image cible.

12. Procédé selon la revendication 11, dans lequel la couche de cadre comprend en outre un service de caméra ; et
la création d'un chemin du capteur d'image cible comprend :
réception, par le service de caméra, d'une demande destinée à créer le chemin du capteur d'image cible et envoyée par le module de contrôle de perception intelligente, dans lequel la demande de création de chemin comprend l'identifiant et le paramètre de configuration du capteur d'image cible ;
envoi, par le service de caméra, de l'identifiant et du paramètre de configuration du capteur d'image cible à la HAL d'appareil photo ;
création, par la HAL d'appareil photo, du chemin du capteur d'image cible sur la base de l'identifiant du capteur d'image cible ;
le renvoi, par la HAL d'appareil photo au service de caméra, d'un résultat indiquant que le chemin du capteur d'image cible est créé avec succès ; et
le renvoi, par le service de caméra, d'un résultat de création de chemin du capteur d'image cible au module de contrôle de perception intelligente sur la base du résultat reçu indiquant que le chemin du capteur d'image cible est créé avec succès.

13. Procédé selon la revendication 12, dans lequel l'obtention, par le module de contrôle de perception intelligente, d'un descripteur de fichier comprend :
l'envoi, par le module de contrôle de perception intelligente, d'une requête de données au service de caméra, la requête de données étant utilisée pour obtenir le descripteur de fichier ;
l'appel, par le service de caméra, de la HAL d'appareil photo pour obtenir le descripteur de fichier sur la base de la requête de données ; et
l'envoi, par le service de caméra, du descripteur de fichier au module de contrôle de perception intelligente.

14. Dispositif électronique (100), dans lequel le dispositif électronique comprend un écran (394), un capteur d'image (393), une mémoire (321), et un ou plusieurs processeurs (310) ; l'écran, le capteur d'image et la mémoire sont couplés au processeur ; l'écran est configuré pour afficher une image générée par le processeur, le capteur d'image est configuré pour collecter des données d'image, la mémoire est configurée pour stocker un code de programme informatique, et le code de programme informatique comprend des instructions informatiques ; et lorsque le processeur exécute les instructions informatiques, le dispositif électronique est activé pour mettre en œuvre le procédé selon l'une quelconque des revendications 1 à 13.

15. Support de stockage lisible, comprenant des instructions informatiques, dans lequel, lorsque les instructions informatiques sont exécutées sur un dispositif électronique, le dispositif électronique est activé pour mettre en œuvre le procédé selon l'une quelconque des revendications 1 à 13.
